# EUROPEAN PATENT APPLICATION

(11) **EP 4 016 932 A1**
(43) Date of publication of application: **22.06.2022**
(21) Application number: 20855159.8
(22) Date of filing: 27.05.2020
(51) Int. Cl.: H04L 12/24

(54) **EVPN AND VPLS COEXISTENCE METHOD, APPARATUS, AND SYSTEM**

(30) Priority: 22.08.2019 CN 201910779880
(71) Applicant: Huawei Technologies Co., Ltd., Longgang District Shenzhen, Guangdong 518129 (CN)
(72) Inventor: WANG, Haibo, Shenzhen, Guangdong 518129 (CN)
(74) Representative: Gill Jennings & Every LLP
(86) International application number: PCT/CN2020/092705
(87) International publication number: WO 2021/031648

(57) **Abstract**

A traffic forwarding method in an EVPN and VPLS active-active integration network and a device are provided. The network includes a group of multi-homed PEs including a plurality of PEs on an EVPN side, and the group of multi-homed PEs are all connected to a same PE device on a VPLS side using inter-network PWs. The inter-network PWs are configured to forward traffic between the group of multi-homed PEs on the EVPN side and the PE device on the VPLS side. The forwarding is performed based on specific preset rules using the inter-network PWs. According to the method in this application, data traffic in the EVPN and VPLS active-active integration network can be normally forwarded, thereby ensuring reliability and stability of service running.

## Description

This application claims priority to Chinese Patent Application No. CN201910779880.X, filed on August 22, 2019, and entitled "METHOD, DEVICE, AND SYSTEM FOR EVPN AND VPLS COEXISTENCE ACTIVE-ACTIVE", which is incorporated herein by reference in its entirety.

### TECHNICAL FIELD

Embodiments of this application relate to the field of communications technologies, and in particular, to a method for Ethernet virtual private network (English: Ethernet Virtual Private Network, EVPN) and virtual private local area network service (English: Virtual Private Lan Service, VPLS) active-active integration, a device, and a system.

### BACKGROUND

VPLS is a layer 2 packet bearer technology, which is essentially a layer 2 virtual private network (English: Layer 2 Virtual Private Network, L2VPN) technology based on Internet protocol/multiprotocol label switching (English: Internet Protocol/Multiprotocol Label Switching, IP/MPLS) and Ethernet technologies. A core idea of the VPLS technology is to establish and maintain a pseudo wire PW (English: Pseudo Wire, PW) between provider edge (Provider Edge, PE) devices in a VPLS instance using a signaling protocol, and encapsulate a layer 2 protocol frame for transmission and exchange on the PW. The PW is an emulated point-to-point bidirectional connection between a pair of devices that is established in a packet-switched network (English: Packet-Switched Network, PSN) using a layer 2 technology. A provider transmits service data streams between LANs of a customer in different areas using PEs and interconnection PWs in the PSN. In this way, a plurality of LANs of the customer that are distributed in different areas are interconnected into an emulated LAN, which is referred to as a VPLS instance. ALAN in each area may be considered as a network segment of the emulated local area network.

An EVPN (Ethernet Virtual Private Network, EVPN) network can resolve some problems in the VPLS technology to some extent. EVPN is a VPN technology based on an MPLS layer 2 network. According to the technology, media access control (English: Media Access Control, MAC) address learning between PE devices is implemented using a border gateway protocol (English: Border Gateway Protocol, BGP) as a control plane protocol, and a MAC address learning and advertisement process is transferred from being performed on a data plane conventionally to being performed on a control plane, so that MAC address diffusion in a traffic flooding manner is greatly reduced, and a customer edge (English: Customer Edge, CE) device can be supported in multi-homing to the EVPN, to facilitate MAC address management and load balancing. In the EVPN network, PE devices do not need to be connected through a PW, and a CE device may be connected to a PE device in a plurality of access manners. One of important advantages of the EVPN solution is multi-homing of the CE device. The multi-homing of the CE device to the EVPN includes multi-homing to the EVPN using Ethernet links, that is, one CE device is connected to a plurality of network side devices using a plurality of links, respectively.

### SUMMARY

Embodiments of this application provide a packet processing method, device, and system, to resolve a technical problem in the prior art that traffic cannot be normally forwarded in an EVPN and VPLS active-active integration network. EVPN and VPLS networks can be effectively interconnected by performing the method, to ensure normal service running.

According to a first aspect, an embodiment of this application provides a traffic forwarding method. In the method, a first network device runs, together with a plurality of other network devices in a network, an EVPN, where the first network device serves as a PE device and form, together with at least one PE in the EVPN, a multi-homed structure for a CE device or a terminal device; connects to at least one PE in a VPLS using an inter-network PW; receives data traffic; and forwards the data traffic based on a matching result between the data traffic and the following conditions, where the conditions include: (1) being sent by another PE device via an inter-network PW of the first network device; (2) needing to be forwarded by the first network device to a PE device connected via an inter-network PW; and/or (3) including an inter-network PW flag.

In the foregoing technical solution, considering a PW mode type of a conventional VPLS device, a mode of an inter-network PW connected to the first network device may be a mode of being a common PW, belonging to a PW redundancy group that does not support dual-receiving, or belonging to a PW redundancy group that supports dual-receiving. The traffic may be broadcast, unknown unicast, and multicast BUM traffic or unicast traffic. In a possible design, for a plurality of inter-network PWs connected to a group of PEs in the multi-homed structure, one of the inter-network PWs serves as a designated forwarder DF PW, and a remaining inter-network PW serves as a backup designated forwarder BDF PW, to ensure determinacy of a forwarding path when the PEs in the multi-homed structure on an EVPN side forward traffic to a PE device on a VPLS side.

In the foregoing technical solution, when data traffic matches a corresponding condition, the data traffic may be specifically forwarded based on the following forwarding rules.

When the mode of the inter-network PW is being a common PW and to-be-forwarded traffic is BUM traffic, the first network device forwards the BUM traffic based on the following rules: traffic from an AC interface can be replicated to an inter-network DF PW; traffic from an AC interface is not replicated to an inter-network BDF PW; traffic from a common EVPN peer EVPN peer is not replicated to an inter-network PW; traffic from a multi-homed PE is replicated to an inter-network DF PW; and traffic received by an inter-network PW is replicated only to an AC interface, where the common EVPN peer forms an EVPN peer together with at least one of the plurality of PE devices, but the common EVPN peer is not a multi-homed PE.

When the mode of the inter-network PW is being a common PW and to-be-forwarded traffic is unicast traffic, the first network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that does not support dual-receiving and to-be-forwarded traffic is BUM traffic, the first network device forwards the BUM traffic based on the following rules: traffic from an AC interface can be replicated to an inter-network DF PW; traffic from a common EVPN peer is not replicated to an inter-network PW; traffic from a multi-homed PE is replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

In a possible design, when the mode of the inter-network PW is belonging to a PW redundancy group that does not support dual-receiving and to-be-forwarded traffic is BUM traffic, the following forwarding rule may be further included: traffic from an AC interface is not replicated to an inter-network BDF PW. In this way, traffic forwarding overheads can be reduced, and a traffic forwarding bandwidth can be reduced.

When the mode of the inter-network PW is belonging to a PW redundancy group that does not support dual-receiving and to-be-forwarded traffic is unicast traffic, the first network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that supports dual-receiving and to-be-forwarded traffic is BUM traffic, the first network device forwards the BUM traffic based on the following rules: traffic from an AC interface can be replicated to an inter-network DF PW; traffic from an AC interface can be replicated to an inter-network BDF PW; traffic from a common EVPN peer is not replicated to an inter-network PW; traffic from a multi-homed PE is not replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

When the mode of the inter-network PW is belonging to a PW redundancy group that supports dual-receiving and to-be-forwarded traffic is unicast traffic, the first network device determines a forwarding path based on MAC address learning, and the MAC address learning rules are as follows: a multi-homed PE learns MAC from a DF PW; a multi-homed PE learns MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

By setting, matching, and using the foregoing inter-network PW forwarding rules and MAC learning rules for different traffic types, in the EVPN and VPLS active-active integration network, the EVPN side and the VPLS side can be effectively interconnected, to prevent flapping when a VPLS device receives traffic, thereby ensuring normal service running.

In a possible design, for the inter-network PW in the mode of being a common PW, belonging to a PW redundancy group that does not support dual-receiving, or belonging to a PW redundancy group that supports dual-receiving, the rules for learning, by the first network device, a MAC address when forwarding unicast traffic further include: after the EVPN peer finds the MAC with the inter-network PW flag, if it is found that an ESI label value in a packet carrying the MAC exists locally, a BDF PW corresponding to the ESI value is set as a secondary path. When a primary path for forwarding the unicast traffic is unavailable, the secondary path may be used to forward the unicast traffic, thereby improving robustness and security of network communication.

In a possible design, a manner of adding an inter-network PW flag to a MAC address is adding a MAC extended community attribute, and flagging and distinguishing specific types of inter-network PWs using a Flags field; or reusing an existing MAC mobility extended community attribute, and flagging and distinguishing the specific types of inter-network PWs using a reserved bit of a Flags field.

According to a second aspect, an embodiment of this application provides a network device. The network device includes: a memory, configured to store computer-readable instructions; and a processor, configured to invoke the computer-readable instructions to: run, by the network device together with a plurality of other network devices, an EVPN, where the network device serves as a provider edge PE device and forms, together with at least one PE in the EVPN, a multi-homed structure for a CE device or a terminal device; connect to at least one PE in a VPLS using an inter-network PW; receive data traffic; and forward the data traffic based on a matching result between the data traffic and the following conditions, where the conditions include: (1) being sent by another PE device via an inter-network PW of the network device; (2) needing to be forwarded by the network device to a PE device connected via an inter-network PW; and/or (3) including an inter-network PW flag.

In the foregoing technical solution, considering a PW mode type of a conventional VPLS device, a mode of an inter-network PW connected to the network device may be a mode of being a common PW, belonging to a PW redundancy group that does not support dual-receiving, or belonging to a PW redundancy group that supports dual-receiving. The traffic may be broadcast, unknown unicast, and multicast BUM traffic or unicast traffic. In a possible design, for a plurality of inter-network PWs connected to a group of PEs in the multi-homed structure, one of the inter-network PWs serves as a designated forwarder DF PW, and a remaining inter-network PW serves as a backup designated forwarder BDF PW, to ensure determinacy of a forwarding path when the PEs in the multi-homed structure on an EVPN side forward traffic to a PE device on a VPLS side.

In the foregoing technical solution, when data traffic matches a corresponding condition, the data traffic may be specifically forwarded based on the following forwarding rules.

When the mode of the inter-network PW is being a common PW and to-be-forwarded traffic is BUM traffic, the network device forwards the BUM traffic based on the following rules: traffic from an AC interface can be replicated to an inter-network DF PW; traffic from an AC interface is not replicated to an inter-network BDF PW; traffic from a common EVPN peer EVPN peer is not replicated to an inter-network PW; traffic from a multi-homed PE is replicated to an inter-network DF PW; and traffic received by an inter-network PW is replicated only to an AC interface, where the common EVPN peer forms an EVPN peer together with at least one of the plurality of PE devices, but the common EVPN peer is not a multi-homed PE.

When the mode of the inter-network PW is being a common PW and to-be-forwarded traffic is unicast traffic, the network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that does not support dual-receiving and to-be-forwarded traffic is BUM traffic, the network device forwards the BUM traffic based on the following rules: traffic from an AC interface can be replicated to an inter-network DF PW; traffic from a common EVPN peer is not replicated to an inter-network PW; traffic from a multi-homed PE is replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

In a possible design, when the mode of the inter-network PW is belonging to a PW redundancy group that does not support dual-receiving and to-be-forwarded traffic is BUM traffic, the following forwarding rule may be further included: traffic from an AC interface is not replicated to an inter-network BDF PW. In this way, traffic forwarding overheads can be reduced, and a traffic forwarding bandwidth can be reduced.

When the mode of the inter-network PW is belonging to a PW redundancy group that does not support dual-receiving and to-be-forwarded traffic is unicast traffic, the network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that supports dual-receiving and to-be-forwarded traffic is BUM traffic, the network device forwards the BUM traffic based on the following rules: traffic from an AC interface can be replicated to an inter-network DF PW; traffic from an AC interface can be replicated to an inter-network BDF PW; traffic from a common EVPN peer is not replicated to an inter-network PW; traffic from a multi-homed PE is not replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

When the mode of the inter-network PW is belonging to a PW redundancy group that supports dual-receiving and to-be-forwarded traffic is unicast traffic, the first network device determines a forwarding path based on MAC address learning, and the MAC address learning rules are as follows: a multi-homed PE learns MAC from a DF PW; a multi-homed PE learns MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

By setting, matching, and using the foregoing inter-network PW forwarding rules and MAC learning rules for different traffic types, in the EVPN and VPLS active-active integration network, the EVPN side and the VPLS can be effectively interconnected, to prevent flapping when a VPLS device receives traffic, thereby ensuring normal service running.

In a possible design, for the inter-network PW in the mode of being a common PW, belonging to a PW redundancy group that does not support dual-receiving, or belonging to a PW redundancy group that supports dual-receiving, the rules for learning, by the network device, a MAC address when forwarding unicast traffic further include: after the EVPN peer finds the MAC with the inter-network PW flag, if it is found that an ESI label value in a packet carrying the MAC exists locally, a BDF PW corresponding to the ESI value is set as a secondary path. When a primary path for forwarding the unicast traffic is unavailable, the secondary path may be used to forward the unicast traffic, thereby improving robustness and security of network communication.

In a possible design, a manner of adding an inter-network PW flag to a MAC address is adding a MAC extended community attribute, and flagging and distinguishing specific types of inter-network PWs using a Flags field; or reusing an existing MAC mobility extended community attribute, and flagging and distinguishing the specific types of inter-network PWs using a reserved bit of a Flags field.

According to a third aspect, an embodiment of this application provides a traffic forwarding system. The system includes a plurality of first provider edge PE devices. The plurality of first PE devices are EVPN devices, and the plurality of first PE devices form a multi-home structure for a customer edge CE device or a terminal device. Each first PE device in the multi-homed structure is connected to at least one identical second PE device through an inter-network pseudo wire PW, and the second PE device is a VPLS device. The first PE device receives data traffic; and the first PE device forwards the data traffic based on a matching result between the data traffic and the following conditions, where the conditions include: (1) being sent by another PE device via an inter-network PW of the network device; (2) needing to be forwarded by the network device to a PE device connected via an inter-network PW; and/or (3) including an inter-network PW flag.

In the foregoing technical solution, considering a PW mode type of a conventional VPLS device, a mode of an inter-network PW connected to the first PE device may be a mode of being a common PW, belonging to a PW redundancy group that does not support dual-receiving, or belonging to a PW redundancy group that supports dual-receiving. The traffic may be broadcast, unknown unicast, and multicast BUM traffic or unicast traffic. In a possible design, for a plurality of inter-network PWs connected to a group of PEs in the multi-homed structure, one of the inter-network PWs serves as a designated forwarder DF PW, and a remaining inter-network PW serves as a backup designated forwarder BDF PW, to ensure determinacy of a forwarding path when the PEs in the multi-homed structure on an EVPN side forward traffic to a PE device on a VPLS side.

In the foregoing technical solution, when data traffic matches a corresponding condition, the data traffic may be specifically forwarded based on the following forwarding rules.

When the mode of the inter-network PW is being a common PW and to-be-forwarded traffic is BUM traffic, the first PE device forwards the BUM traffic based on the following rules: traffic from an AC interface can be replicated to an inter-network DF PW; traffic from an AC interface is not replicated to an inter-network BDF PW; traffic from a common EVPN peer EVPN peer is not replicated to an inter-network PW; traffic from a multi-homed PE is replicated to an inter-network DF PW; and traffic received by an inter-network PW is replicated only to an AC interface, where the common EVPN peer forms an EVPN peer together with at least one of the plurality of PE devices, but the common EVPN peer is not a multi-homed PE.

When the mode of the inter-network PW is being a common PW and to-be-forwarded traffic is unicast traffic, the first PE device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that does not support dual-receiving and to-be-forwarded traffic is BUM traffic, the first PE device forwards the BUM traffic based on the following rules: traffic from an AC interface can be replicated to an inter-network DF PW; traffic from a common EVPN peer is not replicated to an inter-network PW; traffic from a multi-homed PE is replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

In a possible design, when the mode of the inter-network PW is belonging to a PW redundancy group that does not support dual-receiving and to-be-forwarded traffic is BUM traffic, the following forwarding rule may be further included: traffic from an AC interface is not replicated to an inter-network BDF PW. In this way, traffic forwarding overheads can be reduced, and a traffic forwarding bandwidth can be reduced.

When the mode of the inter-network PW is belonging to a PW redundancy group that does not support dual-receiving and to-be-forwarded traffic is unicast traffic, the first PE device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that supports dual-receiving and to-be-forwarded traffic is BUM traffic, the first PE device forwards the BUM traffic based on the following rules: traffic from an AC interface can be replicated to an inter-network DF PW; traffic from an AC interface can be replicated to an inter-network BDF PW; traffic from a common EVPN peer is not replicated to an inter-network PW; traffic from a multi-homed PE is not replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

When the mode of the inter-network PW is belonging to a PW redundancy group that supports dual-receiving and to-be-forwarded traffic is unicast traffic, the first PE device determines a forwarding path based on MAC address learning, and the MAC address learning rules are as follows: a multi-homed PE learns MAC from a DF PW; a multi-homed PE learns MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

By setting, matching, and using the foregoing inter-network PW forwarding rules and MAC learning rules for different traffic types, in the EVPN and VPLS active-active integration network, the EVPN side and the VPLS can be effectively interconnected, to prevent flapping when a VPLS device receives traffic, thereby ensuring normal service running.

In a possible design, for the inter-network PW in the mode of being a common PW, belonging to a PW redundancy group that does not support dual-receiving, or belonging to a PW redundancy group that supports dual-receiving, the rules for learning, by the first network device, a MAC address when forwarding unicast traffic further include: after the EVPN peer finds the MAC with the inter-network PW flag, if it is found that an ESI label value in a packet carrying the MAC exists locally, a BDF PW corresponding to the ESI value is set as a secondary path. When a primary path for forwarding the unicast traffic is unavailable, the secondary path may be used to forward the unicast traffic, thereby improving robustness and security of network communication.

In a possible design, a manner of adding an inter-network PW flag to a MAC address is adding a MAC extended community attribute, and flagging and distinguishing specific types of inter-network PWs using a Flags field; or reusing an existing MAC mobility extended community attribute, and flagging and distinguishing the specific types of inter-network PWs using a reserved bit of a Flags field.

According to a fourth aspect, an embodiment of this application provides a traffic forwarding system. The system includes: a first connection unit, configured to run, by a first network device together with a plurality of other network devices in a network, an Ethernet virtual private network EVPN, where the first network device serves as a provider edge PE device and forms, together with at least one PE in the EVPN, a multi-homed structure for a customer edge CE device or a terminal device; a second connection unit, configured to connect to, by the first network device, at least one PE in a virtual private local area network service VPLS through an inter-network pseudo wire PW; a receiving unit, configured to receive, by the first network device, data traffic; and a matching unit, configured to forward, by the first network device, the data traffic based on a matching result between the data traffic and the following conditions, where the conditions include: (1) being sent by another PE device via an inter-network PW of the first network device; (2) needing to be forwarded by the first network device to a PE device connected via an inter-network PW; and/or (3) including an inter-network PW flag.

In the foregoing technical solution, considering a PW mode type of a conventional VPLS device, a mode of an inter-network PW connected to the first network device may be a mode of being a common PW, belonging to a PW redundancy group that does not support dual-receiving, or belonging to a PW redundancy group that supports dual-receiving. The traffic may be broadcast, unknown unicast, and multicast BUM traffic or unicast traffic. In a possible design, for a plurality of inter-network PWs connected to a group of PEs in the multi-homed structure, one of the inter-network PWs serves as a designated forwarder DF PW, and a remaining inter-network PW serves as a backup designated forwarder BDF PW, to ensure determinacy of a forwarding path when the PEs in the multi-homed structure on an EVPN side forward traffic to a PE device on a VPLS side.

In the foregoing technical solution, when data traffic matches a corresponding condition, the data traffic may be specifically forwarded based on the following forwarding rules.

When the mode of the inter-network PW is being a common PW and to-be-forwarded traffic is BUM traffic, the first network device forwards the BUM traffic based on the following rules: traffic from an AC interface can be replicated to an inter-network DF PW; traffic from an AC interface is not replicated to an inter-network BDF PW; traffic from a common EVPN peer EVPN peer is not replicated to an inter-network PW; traffic from a multi-homed PE is replicated to an inter-network DF PW; and traffic received by an inter-network PW is replicated only to an AC interface, where the common EVPN peer forms an EVPN peer together with at least one of the plurality of PE devices, but the common EVPN peer is not a multi-homed PE.

When the mode of the inter-network PW is being a common PW and to-be-forwarded traffic is unicast traffic, the first network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that does not support dual-receiving and to-be-forwarded traffic is BUM traffic, the first network device forwards the BUM traffic based on the following rules: traffic from an AC interface can be replicated to an inter-network DF PW; traffic from a common EVPN peer is not replicated to an inter-network PW; traffic from a multi-homed PE is replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

In a possible design, when the mode of the inter-network PW is belonging to a PW redundancy group that does not support dual-receiving and to-be-forwarded traffic is BUM traffic, the following rule may be further included: traffic from an AC interface is not replicated to an inter-network BDF PW. In this way, traffic forwarding overheads can be reduced, and a traffic forwarding bandwidth can be reduced.

When the mode of the inter-network PW is belonging to a PW redundancy group that does not support dual-receiving and to-be-forwarded traffic is unicast traffic, the first network device determines a forwarding path based on MAC address learning, and the MAC address learning rules are as follows: a multi-homed PE learns MAC from a DF PW; a multi-homed PE does not learn MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

When the mode of the inter-network PW is belonging to a PW redundancy group that supports dual-receiving and to-be-forwarded traffic is BUM traffic, the first network device forwards the BUM traffic based on the following rules: traffic from an AC interface can be replicated to an inter-network DF PW; traffic from an AC interface can be replicated to an inter-network BDF PW; traffic from a common EVPN peer is not replicated to an inter-network PW; traffic from a multi-homed PE is not replicated to an inter-network DF PW; traffic received by an inter-network PW is replicated to an AC interface and a multi-homed PE, and carries an ESI label when replicated to the multi-homed PE; and after receiving the traffic carrying the ESI label, the multi-homed PE replicates the traffic only to an AC interface, where the common EVPN peer forms an EVPN peer together with at least one of the plurality of PE devices, but the common EVPN peer is not a multi-homed PE.

When the mode of the inter-network PW is belonging to a PW redundancy group that supports dual-receiving and to-be-forwarded traffic is unicast traffic, the first network device determines a forwarding path based on MAC address learning, and the MAC address learning rules are as follows: a multi-homed PE learns MAC from a DF PW; a multi-homed PE learns MAC from a BDF PW; after learning the MAC from the DF PW, the multi-homed PE synchronizes the MAC to an EVPN peer with an inter-network PW flag added; and after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

By setting, matching, and using the foregoing inter-network PW forwarding rules and MAC learning rules for different traffic types, in the EVPN and VPLS active-active integration network, the EVPN side and the VPLS can be effectively interconnected, to prevent flapping when a VPLS device receives traffic, thereby ensuring normal service running.

In a possible design, for the inter-network PW in the mode of being a common PW, belonging to a PW redundancy group that does not support dual-receiving, or belonging to a PW redundancy group that supports dual-receiving, the rules for learning, by the first network device, a MAC address when forwarding unicast traffic further include: after the EVPN peer finds the MAC with the inter-network PW flag, if it is found that an ESI label value in a packet carrying the MAC exists locally, a BDF PW corresponding to the ESI value is set as a secondary path. When a primary path for forwarding the unicast traffic is unavailable, the secondary path may be used to forward the unicast traffic, thereby improving robustness and security of network communication.

In a possible design, a manner of adding an inter-network PW flag to a MAC address is adding a MAC extended community attribute, and flagging and distinguishing specific types of inter-network PWs using a Flags field; or reusing an existing MAC mobility extended community attribute, and flagging and distinguishing the specific types of inter-network PWs using a reserved bit of a Flags field.

According to a fifth aspect, an embodiment of this application provides a computer-readable storage medium or a computer program product, configured to store a computer program. The computer program is configured to perform the method in any possible design of the first aspect.

### BRIEF DESCRIPTION OF DRAWINGS

To describe the technical solutions in the embodiments of this application more clearly, the following briefly describes the accompanying drawings required for describing the embodiments.
FIG. 1 is a schematic structural diagram of a VPLS network according to the prior art;
FIG. 2 is a schematic structural diagram of an EVPN network according to an embodiment of the present invention;
FIG. 3 is a schematic diagram of an application network scenario of a traffic forwarding method according to an embodiment of this application;
FIG. 4 is a schematic flowchart of a traffic forwarding method according to an embodiment of this application;
FIG. 5a to FIG. 5d are schematic diagrams of processes of forwarding BUM traffic according to an embodiment of this application;
FIG. 6 is a schematic diagram of a process of forwarding unicast traffic according to an embodiment of this application;
FIG. 7 is a schematic diagram of another process of forwarding BUM traffic according to an embodiment of this application;
FIG. 8 is a schematic diagram of another process of forwarding BUM traffic according to an embodiment of this application;
FIG. 9a and FIG. 9b are schematic diagrams of field formats of a MAC address according to an embodiment of this application;
FIG. 10 is a schematic structural diagram of a network device according to an embodiment of this application; and
FIG. 11 is a schematic structural diagram of a traffic forwarding system according to an embodiment of this application.

### DESCRIPTION OF EMBODIMENTS

The following describes technical solutions of embodiments in this application with reference to accompanying drawings. A network architecture and a service scenario that are described in the embodiments of this application are intended to describe the technical solutions in the embodiments of this application more clearly, and do not constitute a unique limitation on the technical solutions provided in the embodiments of this application. A person of ordinary skill in the art may learn that, as a network architecture evolves and a new service scenario emerges, the technical solutions provided in the embodiments of this application are also applicable to similar technical problems.

For more clear descriptions, some working principles and features about a VPLS network and an EVPN network are described first.

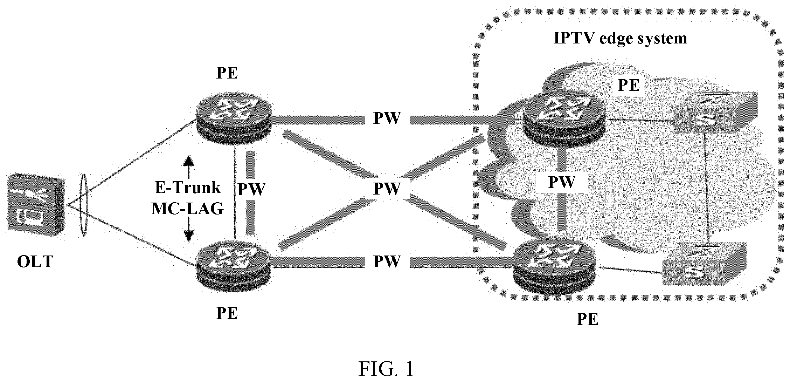

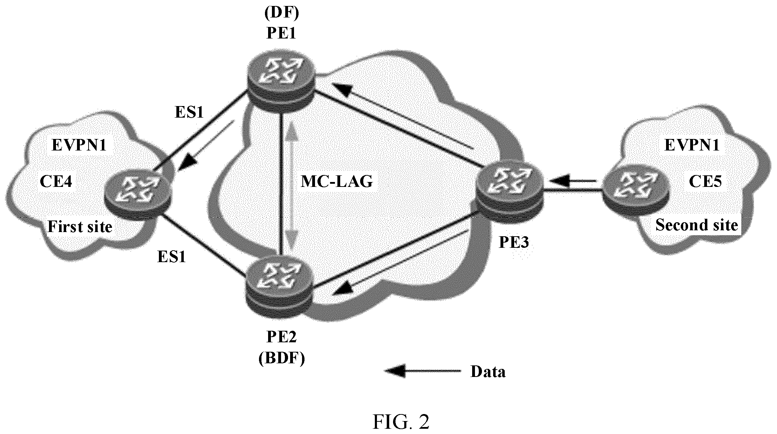

FIG. 1 shows a topology model of a VPLS network structure that is used in an Internet protocol television (English: Internet Protocol Television, IPTV) service scenario. An optical line terminal (Optical Line Terminal, OLT) device serves as a customer edge (Customer Edge, CE) device, and a provider disposes, on a device side, a plurality of PE devices for accessing a VPLS service. The OLT is connected to a corresponding provider edge PE device using an attachment circuit (Attachment Circuit, AC). The PE devices are connected using full-mesh pseudo wires (English: Full-mesh PW), that is, each two of the PE devices are connected through a PW. This networking model is also applicable to other services than IPTV Although VPLS is effectively combined with features of a plurality of technologies such as VPN, IP/MPLS, and Ethernet switching, in a VPLS network, each VPLS instance needs to establish full-mesh label switched path (English: Label Switched Path, LSP) tunnels between n PE devices in the instance. A quantity of the tunnels is n×(n-1)/2. This causes huge signaling overheads. In addition, the PE devices need to replicate packets for each configured PW, resulting in relatively large processing burden. The foregoing two factors restrict a VPLS networking scale. FIG. 2 is a schematic structural diagram of an example EVPN network. A network 100 includes a backbone network provided by a service provider and a plurality of EVPN sites (English: Site). The backbone network includes PE devices PE1, PE2, and PE3, and a plurality of provider (English: Provider, P) devices (not shown in the figure). The plurality of EVPN sites include a first site and a second site. The first site and the second site belong to a same EVPN1. A CE4 is dual-homed to the PE1 and the PE2, and a CE5 is single-homed to the PE3. After a neighbor relationship is established between the PE devices, the PE devices send an Ethernet segment route to each other. An Ethernet segment identifier (English: Ethernet Segment Identifier, ESI) value is carried in the Ethernet segment route. For example, in the scenario shown in FIG. 2, the PE1 and the PE2 serve as devices to which the CE4 is dual-homed, and have a same ESI value - ESI1. Generally, known unicast traffic, or broadcast, unknown unicast, and multicast (English: BUM) traffic may be forwarded in the constructed EVPN network. The known unicast traffic may also be referred to as unicast traffic for short. The BUM traffic generally includes broadcast traffic, multicast traffic, and unicast traffic with an unknown destination address. After receiving unicast traffic, a PE device forwards the unicast traffic to a next hop based on a MAC address table using an outbound interface of an entry. After receiving broadcast, unknown unicast, and multicast traffic, a PE device floods (English: flood) the broadcast, unknown unicast, and multicast traffic in a broadcast domain.

In the EVPN network scenario shown in FIG. 2, because the PE1 and the PE2 support dual-homing of the CE4, in this case, to prevent the CE4 from receiving repeated BUM traffic from the homed PE1 and PE2, thereby causing a waste of network bandwidth resources, a designated forwarder (English: Designated Forwarder, DF) election mechanism is introduced into the EVPN, that is, a PE is designated from the PE1 and the PE2 to forward BUM traffic. In a possible example, primary and backup devices may be determined between the PE1 and the PE2 using a multi-chassis link aggregation group (English: Multi-Chassis Link Aggregation Group, MC-LAG). For example, in FIG. 2, the PE1 is elected as a DF of the CE4, and may also be referred to as a primary device, and the PE2 serves as a backup DF (English: Backup DF, BDF), and may also be referred to as a secondary device. In this case, BUM traffic from the CE5 is forwarded only from the PE1 to the CE4, and the PE2 serving as a BDF does not forward the BUM traffic when the PE1 works normally.

In CE4 device dual-homing networking, a redundancy mode of EVPN networking may be configured. That is, an active mode of PEs connected to a same CE is configured to a single-active mode or a multi-active mode. An Ethernet link may be in an active state or an inactive state. The active state means that the Ethernet link can be used to forward a data stream. The single-active mode means that only one Ethernet link is in the active state, and one or more other Ethernet links are in the inactive state. The multi-active mode means that states of some Ethernet links in Ethernet link segments are active, and states of other Ethernet links are inactive. The Ethernet links in the active state can forward a data stream through load balancing, to provide a transmission capability of a larger bandwidth. When an active Ethernet link is faulty, the active Ethernet link may be switched to a standby Ethernet link to forward a data stream.

Whether load balancing is performed for unicast traffic in CE dual-homing networking may be controlled by configuring the redundancy mode. For example, in FIG. 2, an active mode of the PE1 and the PE2 that are both connected to the CE4 is configured to an active-active mode. That is, the CE4 in this case supports dual-homing active-active. In this way, when the CE5 sends unicast traffic to the CE4 via the PE3, the traffic is sent to both the PE1 and the PE2 through load balancing. In addition, the EVPN further supports an aliasing (English: Aliasing) function. For example, in a CE dual-homing active-active scenario, a primary device PE can learn a MAC address of a CE side, but a secondary device PE cannot learn the MAC address of the CE side for some reasons. In this case, a remote PE may detect reachability of the MAC address of the CE side using an ESI value carried in an Ethernet automatic discovery route (English: Ethernet A-D Route) sent by a dual-homed PE. This function is referred to as aliasing. As shown in FIG. 2, in the PE1 and the PE2, only the PE1 sends, to the PE3, a MAC/IP address advertisement route (English: MAC/IP Advertisement Route) carrying a MAC address of a CE4 side, but the PE3 may detect, using an ESI value ESI1 carried in an Ethernet A-D route, that the PE2 flagged with the same value ESI1 can also reach the CE4, that is, load balancing may be implemented.

When the CE4 is in a dual-homing active-active mode, that is, when the CE4 is dual-homed to the PE1 and the PE2 and load balancing is enabled, if a neighbor relationship is established between the PE1 and the PE2, after the PE1 receives BUM traffic from the CE4, the PE1 forwards the BUM traffic to the PE2. To prevent the PE2 from forwarding the traffic to the CE4 and forming a loop, a split horizon function is defined in EVPN. That is, after the PE1 receives the BUM traffic from the CE4, the PE1 forwards the BUM traffic to the PE2. After receiving a packet, the PE2 checks an EVPN ESI label (English: EVPN ESI Label) carried in the traffic. If it is found that an ESI value in the label is equal to an ESI value of a network segment connected to the PE2 and the CE4, the PE2 does not send the BUM traffic to the CE4, to avoid a loop.

It should be noted that the foregoing case in which the CE4 is dual-homed to the PE1 and the PE2 is merely used as an example. In an actual application scenario, a CE may be multi-homed to more than two PE devices. In this case, all PE devices to which a same CE device is homed are assigned a same ESI value. In addition, the multi-homed PE devices may be set to a multi-active mode, to implement load balancing between each other. The foregoing manner is referred to as CE multi-homing multi-active. In addition, not only the CE device but also another device type may be multi-homed to a plurality of PE devices. The another device type may be, for example, a terminal device. The multi-homing includes dual-homing, and the multi-active mode or the single-active mode is set for the plurality of PE devices as required. This may be set with reference to a specific application scenario. In either case, an implementation mechanism of multi-homing to more than two PE devices in the multi-active mode is similar to the dual-homing active-active mode.

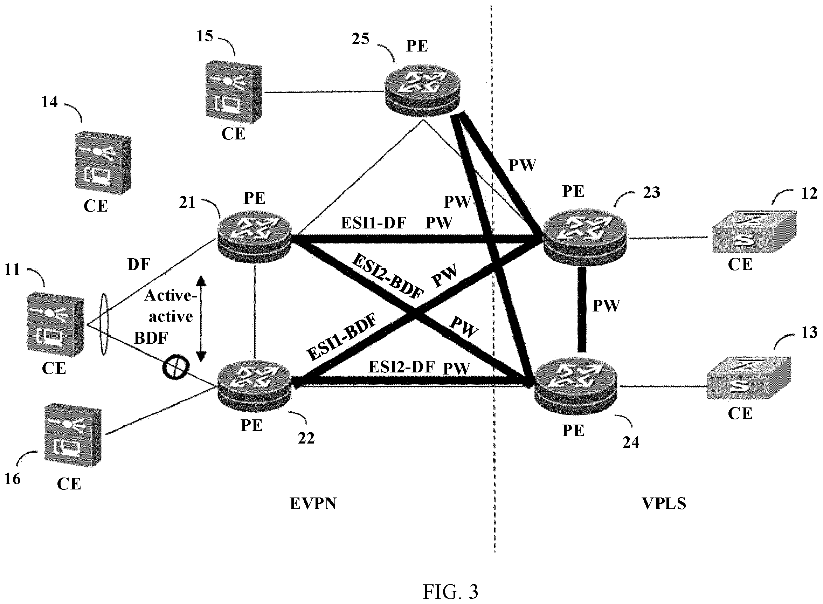

Currently, a problem of switching from a VPLS network to an EVPN network exists in a provider network. In some specific scenarios, a provider may be intended to reconstruct only some PE devices. The IPTV service type shown in FIG. 1 is used as an example. The provider may be intended to reconstruct only a PE device side connected to the OLT device, that is, PE devices on a left side, to support EVPN, but not intended to modify configuration of an IPTV side, that is, PE devices on a right side. In this case, if the PE devices on the left side simply retain a VPLS PW mechanism for data transmission, or are modified to using an EVPN mechanism for data transmission, a problem may occur. For example, if the PE devices on the left side retain the PW mechanism, BUM traffic of the PE devices on the right side passes through the two PE devices on the left side, resulting in redundancy on the OLT device. If the PE devices on the left side use the EVPN mechanism, BUM traffic sent from the OLT to the IPTV side continuously flaps on the PEs on the right side, causing various possible network problems. The technical solutions described in the embodiments of this application may be applied to an EVPN and VPLS active-active integration network. FIG. 3 shows a scenario of a possible EVPN and VPLS active-active integration network. In FIG. 3, provider edge devices PE21, PE22, and PE25 support EVPN after network reconstruction, and provider edge devices PE23 and PE24 still retain conventional VPLS. In this case, a VPLS PW connection needs to be established between the PE23 and the PE24, and the PE23 and the PE24 need to establish VPLS PW connections to the reconstructed PE21, PE22, and PE25, respectively. A CE1 is dual-homed to the PE21 and the PE22, and the PE21 and the PE22 are set to active-active. In addition, to describe the embodiments of this application more clearly, as a device different from the PE21 and the PE22, in the scenario shown in FIG. 3, although the PE25 is reconstructed to support EVPN, the PE25 does not support CE dual-homing dual-active like the PE21 and the PE22, but provides access for a CE15 as a general PE device supporting EVPN. The PE21, the PE22, and the PE25 form an EVPN peer (English: EVPN Peer). It should be noted that a person skilled in the art should understand that the scenario shown in FIG. 3 and specific implementations of embodiments described below based on the scenario are merely examples, and should not constitute a limitation on this application.

In the scenario shown in FIG. 3, only a data transmission mechanism of a single EVPN or VPLS network is available, and a service in the EVPN and VPLS active-active integration network cannot be run normally. Therefore, in the embodiments of this application, an inter-network PW mode is first defined. A PW in this mode is applicable to a PW connection between a multi-homed PE device on an EVPN side and a PE device on a VPLS side, and needs to follow specific replication and forwarding rules between the EVPN side and the VPLS side to ensure normal traffic forwarding between the EVPN side and the VPLS side.

The replication and forwarding rules between the EVPN side and the VPLS side refer to rules followed when PE devices on the EVPN side and the VPLS side communicate with each other. When PEs only on the EVPN side communicate with each other, or PEs only on the VPLS side communicate with each other, a general rule of EVPN or VPLS is followed, respectively. The foregoing explanations apply to a plurality of or all embodiments of this application.

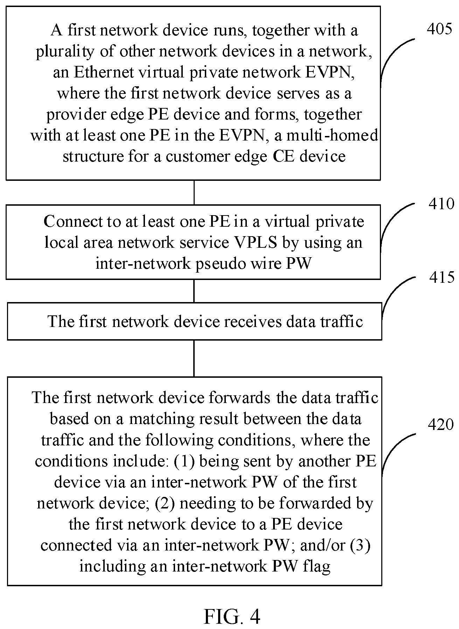

An embodiment of this application provides a traffic forwarding method 400. A procedure of the method 400 is shown in FIG. 4, and specifically includes the following content.

S405: A first network device runs, together with a plurality of other network devices in a network, an Ethernet virtual private network EVPN, where the first network device serves as a provider edge PE device and forms, together with at least one PE in the EVPN, a multi-homed structure for a customer edge CE device or a terminal device.

S410: Connect to at least one PE in a virtual private local area network service VPLS through an inter-network pseudo wire PW.

S415: The first network device receives data traffic.

S420: The first network device forwards the data traffic based on a matching result between the data traffic and the following conditions, where the conditions include:

(1) being sent by another PE device via an inter-network PW of the network device; (2) needing to be forwarded by the network device to a PE device connected via an inter-network PW; and/or (3) including an inter-network PW flag.

For example, in FIG. 3, the PE21 receives BUM traffic sent by the PE22, and forwards the BUM traffic to the CE12 device. Based on the foregoing content, the PE21, as the first network device, conforms to the network structure described in S405 and S410. Based on S415, the PE21 receives the BUM traffic sent by the PE22 device. The PE21 determines whether the BUM traffic meets one or more of the three conditions in S410. Based on S420, the PE21 determines that the BUM traffic needs to be forwarded to the PE23 via an inter-network PW ESI1 DF PW, so that the PE23 then forwards the BUM traffic to the CE12, that is, the condition (2) in S420 is met. In this case, the PE21 forwards the BUM traffic to the PE23 based on forwarding rules determined for inter-network PWs. It should be noted that, in the entire EVPN and VPLS active-active integration network, an EVPN side may include one or more groups of multi-homed PEs, and each PE device in each group of multi-homed PEs is connected to a same PE device on a VPLS side through a PW, and PWs connected to each group of multi-homed PEs are all in an inter-network PW mode.

In this embodiment of this application, the following describes applicable rules and traffic forwarding processes of inter-network PWs with reference to several specific scenarios.

In a possible design, for the EVPN and VPLS active-active integration network, for example, the network shown in FIG. 3, a PW type for connecting the EVPN side and the VPLS side is a common mode PW, for example, a full-mesh full-mesh networking mode. In the foregoing case, the PE23 actually establishes PW connections to the PE21 and the PE22. That is, for the PE21 and the PE22, PWs from the PE21 and the PE22 respectively to the PE23 actually form a group of dual-homed PWs. To ensure normal service forwarding, it is necessary to allow both the PE21 and the PE22 to process traffic when the PE23 sends the traffic to the PE21 and the PE22. However, because the CE11 is in a dual-homing dual-active mode, traffic from the CE11 needs to be sent to the PE23 only through either the PE21 or the PE22. Otherwise, a path through which the PE23 receives the traffic from the CE11 is unstable, resulting in flapping on the PE23 on the VPLS side. In this embodiment of this application, PWs between the PE21 and the PE23 and between the PE22 and the PE23 are both set to inter-network mode PWs, and a same ESI value ESI1 is set for the two PWs, to indicate that the two PWs are dual-homed. Similarly, PWs between the PE21 and the PE24 and between the PE22 and the PE24 are also set to inter-network mode PWs, and a same ESI value ESI2 is set for the two PWs.

Based on whether a traffic type is unicast traffic or BUM traffic, the network includes at least two possible scenarios, and corresponding traffic processing methods are as follows:
Scenario 1: A PW is a common mode PW, and to-be-forwarded traffic is BUM traffic.

For ease of understanding, a BUM traffic replication rule in a single EVPN network is first described herein, which is referred to as a general rule of EVPN in this embodiment of the present invention. In the single EVPN network, after receiving BUM traffic sent by a CE device, a PE device replicates the BUM traffic to all locally connected attachment circuits ACs, and all EVPN peers (English: Peer) that exchange packet messages with the PE device. The AC is a link for a CE device or another user equipment to access the PE, and replicated traffic may be sent to the CE device or the another user equipment using the AC. In this case, another PE device that receives the BUM traffic sent by the PE device replicates the BUM traffic to all locally connected ACs, but does not replicate the BUM traffic to an EVPN peer of the another PE device. In addition, when replicating the BUM traffic to the ACs, the another PE device performs split horizon processing based on an ESI label carried in the BUM traffic. That is, when the another PE device finds that as an ESI value of the ESI label carried in the BUM traffic is the same as an ESI value locally stored in the another PE device, and the another PE device is set as a BDF role corresponding to the ESI value, the BUM traffic is not replicated to a corresponding AC. For example, in a scenario of traffic forwarding of a PE device on the EVPN side shown in FIG. 3, when receiving BUM traffic sent by the CE11 via an AC, the PE21 replicates the BUM traffic to an AC interface configured to access a CE14, and the PE22 and the PE25 that are EVPN peers of the PE21. After receiving the BUM traffic sent by the PE21, the PE22 replicates the BUM traffic to an AC interface configured to access a CE16. Because the PE22 finds that an ESI value of an ESI label in a packet received from the PE21 is the same as an ESI value locally stored in the PE22, the PE22 does not replicate the BUM traffic to an AC interface corresponding to the CE11 for which the PE2 is set as an ESI BDF.

Second, a BUM traffic replication rule in a single VPLS network is described, which is referred to as a general rule of VPLS for common PWs in this embodiment of the present invention. In the single VPLS network, a PE device forwards traffic received from a CE device to all PWs, but does not forward traffic received from any PE device, to avoid a loop.

Based on the foregoing content, replication rules for the BUM traffic defined in the scenario 1 in a broadcast domain in, for example, the EVPN and VPLS active-active integration network shown in FIG. 3 are further described. For more clear descriptions, concepts in the replication rules are first clarified. A common EVPN peer described in this embodiment of the present invention refers to a PE device that belongs to an EVPN type but is not a member of any multi-homed PE group in the network. For example, the PE25 shown in FIG. 3 is a common EVPN peer. More particularly, the PE25, as a common EVPN peer, is further directly connected to a PE device on the VPLS side through a PW. In addition, in the EVPN and VPLS active-active integration network, to prevent flapping on a PE due to multi-homed PWs when traffic is sent from the EVPN side to the VPLS side, a DF PW and a BDF PW need to be further set for inter-network multi-homed PWs for distinguishing. A same ESI value is set for all inter-network PWs that are multi-homed to a same PE device, one of the inter-network PWs is elected or set as a DF PW for the ESI value, and a remaining inter-network PW is used as a BDF PW for the ESI value. In a specific example, in FIG. 3, both the PE21 and the PE22 on the EVPN side are connected to the PE23 on the VPLS side in an inter-network PW form. In other words, the PE21 and the PE22 are connected to the PE23 through inter-network dual-homed PWs, respectively. In this case, PWs connecting the PE21 and the PE23 and connecting the PE22 and the PE23 are flagged with a same ESI value ESI1. In addition, through election or setting, the inter-network PW connecting the PE21 and the PE23 is flagged as an ESI1 DF PW and the inter-network PW connecting the PE22 and the PE23 is flagged as an ESI1 BDF PW. A specific flagging manner may be implemented, for example, by setting a newly added PW field. Similarly, when each of the PE21 and the PE22 is connected to the PE24 using an inter-network dual-homed PW, an inter-network PW connecting the PE22 and the PE24 is flagged as an ESI2 DF PW, and an inter-network PW connecting the PE21 and the PE24 is flagged as an ESI2 BDF PW. It should be noted that the foregoing explanations about the common EVPN peer, the DF PW, and the BDF PW are also applicable to other embodiments of this application.

Therefore, for the BUM traffic defined in the scenario 1, replication and forwarding rules between the EVPN side and the VPLS side are specifically as follows:
R505: Traffic from an AC interface can be replicated to an inter-network DF PW.
R510: Traffic from an AC interface is not replicated to an inter-network BDF PW.
R515: Traffic from a common EVPN peer is not replicated to an inter-network PW.
R520: Traffic from a multi-homed PE is replicated to an inter-network DF PW.
R525: Traffic received by an inter-network PW is replicated only to an AC interface.

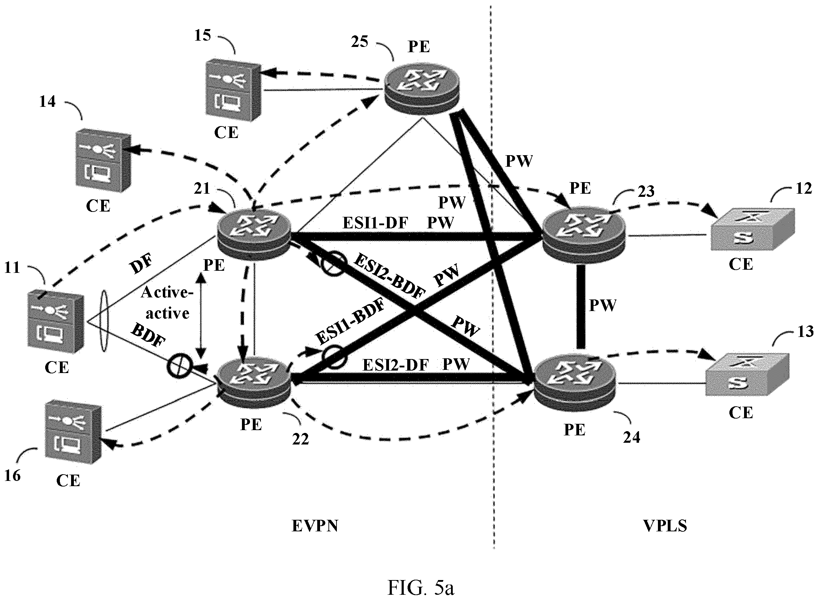

Based on the foregoing replication rules R505 to R525, the network structure shown in FIG. 3 is still used as an example to analyze replication and forwarding of BUM traffic in the foregoing structure, which is specifically shown in FIG. 5a to FIG. 5d.

FIG. 5a shows a replication and forwarding process when BUM1 traffic sent from the CE11 on the EVPN side is first received by the PE21.

On the EVPN side, after the BUM1 traffic sent by the CE11 is received by the PE21, based on the general rule of EVPN for BUM1 traffic replication and forwarding, the PE21 replicates the BUM1 traffic to the AC interface on the PE21 that is configured to access the CE14, but does not replicate the BUM1 traffic to the AC interface corresponding to the CE11 from which the BUM1 traffic is sent, and the PE21 further replicates the BUM1 traffic to all EVPN peers of the PE21: the PE22 and the PE25.

When the BUM1 traffic is forwarded from the PE21 to the PE23 or the PE24, the BUM1 traffic is sent from the EVPN side to the VPLS side. In this case, because the BUM1 traffic enters the PE21 from the AC interface on the PE21 that is connected to the CE11, the replication rules R505 and R510 need to be applied. That is, the PE21 replicates the BUM1 traffic to the inter-network PW flagged as a DF PW to send the BUM1 traffic to the PE23. The PE21 finds that the inter-network PW between the PE21 and the PE24 is flagged as a BDF PW, and therefore does not replicate the BUM1 traffic to the inter-network PW flagged as a BDF PW. Therefore, the PE24 does not receive the BUM1 traffic of the CE11 sent from the PE21.

After receiving the BUM1 traffic replicated by the PE21, based on the general rule of EVPN, the PE22 sends, on the EVPN side, the BUM1 traffic to the AC interface on the PE22 that is configured to access the CE16. In addition, the PE22 finds that an ESI value of an ESI label carried in the BUM1 traffic is the same as the ESI value locally stored in the PE22. That is, the BUM1 traffic comes from the PE21 that has a CE11 dual-homing relationship with the PE22, and the PE22 is flagged as a BDF in the devices to which the CE11 is dual-homed. In this case, the PE22 does not forward the BUM1 traffic to the CE11 based on an EVPN split horizon principle. In addition, based on the general rule of EVPN, the PE22 does not replicate the BUM1 traffic to another EVPN peer, to avoid a loop. When the PE22 forwards the BUM1 traffic to the PE23 or the PE24, the PE22 finds that the BUM1 traffic is traffic from the PE21 that has a CE11 dual-homing relationship with the PE22, and the replication rule R520 needs to be applied. Therefore, the PE22 replicates the BUM1 traffic to the inter-network PW flagged as a DF PW to forward the BUM1 traffic to the PE24. The PE22 does not replicate the BUM1 traffic to the inter-network PW flagged as a BDF PW. Therefore, the PE23 does not receive the BUM1 traffic of the CE11 sent from the PE22. In addition, after the PE23 receives the BUM1 traffic replicated by the PE21 using the inter-network DF PW, based on the general rule of VPLS, the PE23 forwards the BUM1 traffic only to the AC interface configured to connect to the CE12, and does not replicate the BUM1 traffic to another PW. Similar to the operation of the PE23, after receiving the BUM1 traffic replicated by the PE22 using the inter-network DF PW, the PE24 forwards the BUM1 traffic only to the AC interface configured to connect to the CE12.

After the PE25 receives the BUM1 traffic replicated by the PE21, based on the general rule of EVPN, the PE25 sends, on the EVPN side, the BUM1 traffic to the AC interface configured to access the CE15, and based on the general rule of VPLS, the PE25 does not need to forward, on the VPLS side, the BUM1 traffic to the PE23 and the PE24 that are connected to the PE25 using common PWs. Therefore, for the CE devices CE12 and CE13 on the VPLS side, the BUM1 traffic sent from the CE11 is sent to the CE12 through a forwarding path of CE11-PE21-PE23, and the CE13 receives the BUM1 traffic of the CE11 through a forwarding path of CE11-PE21-PE22-PE24. In this way, it is ensured that the BUM1 traffic is sent to the CE12 or the CE13 only through a unique link on the PE23, so that no flapping occurs when the traffic is sent from the EVPN side to the CE device on the VPLS side. In addition, based on the general rule of EVPN, the CE devices CE14, CE15, and CE16 on the EVPN side may also receive the BUM1 traffic sent from the CE11. Finally, normal service running is ensured.

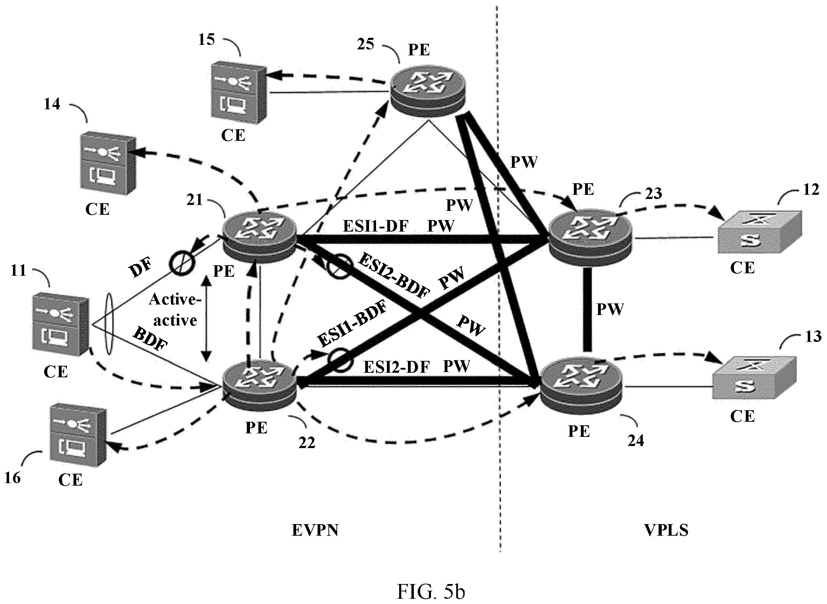

Because the CE11 is in a dual-homed mode, in some cases, for example, the CE11 may randomly determine, using a hash algorithm or another algorithm, whether to send BUM traffic to the PE21 or the PE22. In this case, for a specific replication and forwarding process, refer to FIG. 5b. When the CE11 sends BUM2 traffic to the PE22, the PE22 receives the BUM2 traffic sent from the AC interface of the CE11, and replicates the traffic to the VPLS side based on rules R505 and R510, that is, replicates the traffic to the PE24 via the DF PW, but does not replicate the traffic to the PE23 that is connected to the PE22 using the BDF PW. After receiving the BUM2 traffic replicated by the PE22 to the PE21, the PE21 replicates the traffic to the VPLS side based on rule R520. After the PE25 receives the BUM2 traffic replicated by the PE22 to the PE25, because the PE25 is a common EVPN peer, based on the general rule of EVPN, the PE25 replicates the traffic only to the AC interface on the PE25 that is configured to connect to the CE15. After receiving the BUM2 traffic sent by the PE21, the PE23 replicates the BUM2 traffic to the AC interface on the PE23 that is configured to connect to the CE12. Similar to the operation of the PE23, after receiving the BUM2 traffic sent by the PE22, the PE24 replicates the BUM2 traffic to the AC interface on the PE24 that is configured to connect to the CE13. Because the forwarding process is similar to the foregoing process in which the PE21 first receives the BUM2 traffic, details are not described herein again. Finally, the CE12 on the VPLS side receives the BUM2 traffic via a forwarding path of CE11-PE22-PE21-PE23, and the CE13 receives the BUM2 traffic via CE11-PE22-PE24.

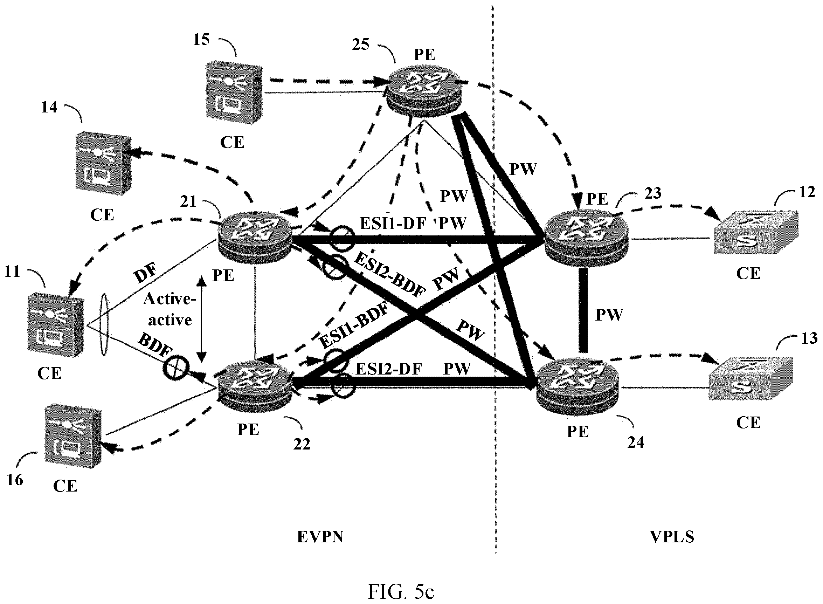

When the PE25 on the EVPN side receives BUM3 traffic sent by the CE15, a traffic replication and forwarding process in the entire network is shown in FIG. 5c. Because the PE25 is a common EVPN peer, the general rule of EVPN should be applied. In this case, the PE25 replicates the BUM3 traffic to the EVPN peers PE21 and PE22, and the PE23 and the PE24 that are connected to the PE25 using PWs. After the PE21 receives the traffic replicated by the PE25, based on the replication rule R515, the BUM3 traffic from the common EVPN peer PE25 is replicated only to ACs of the CE11 and CE14 that are connected to the PE21, and the traffic is not replicated via any inter-network PW, that is, the DF PW and the BDF PW that are connected to the PE23 and the DF PW and the BDF PW that are connected to the PE24. Similar to the operation of the PE21, when receiving the BUM3 traffic sent by the PE25, the PE22 also replicates the BUM3 traffic only to the AC interface connected to the CE16. In this way, it can be ensured that the PE23 and the PE24 receive the BUM3 traffic only from the PE25, and do not receive the BUM3 traffic from the PE21 or the PE22, thereby ensuring that no flapping occurs on the PE23 and the PE24. After the PE23 and the PE24 receives the BUM3 traffic, based on rule R525, that is, the BUM3 traffic received from the inter-network PW is replicated only to an AC interface, the PE23 and the PE24 replicate the BUM3 traffic to the AC interfaces of the CE12 and the CE13 connected to the PE23 and PE24, respectively, and do not replicate the traffic to any inter-network PW.

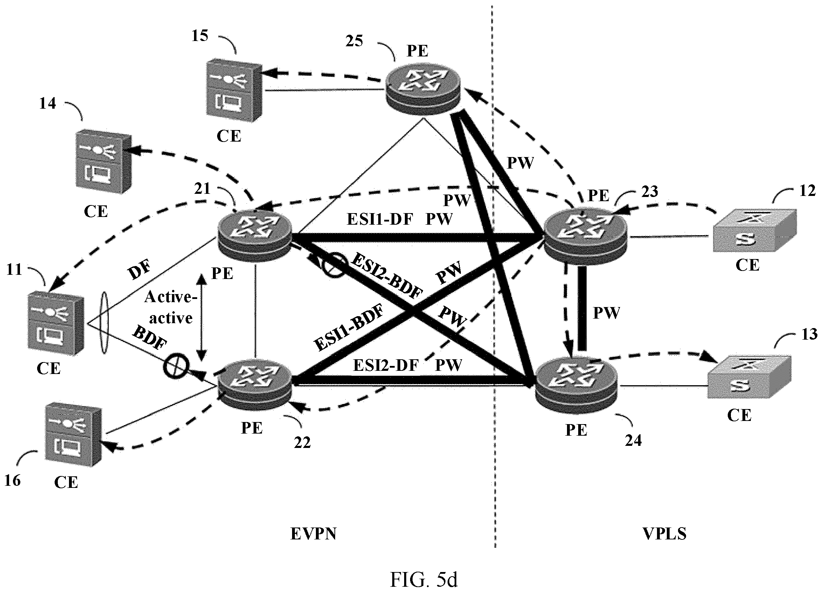

FIG. 5d shows a process of replicating and forwarding BUM4 traffic sent from the CE12 on the VPLS side. The BUM4 traffic sent from the CE12 is replicated to all PWs after reaching the PE23. In this case, the PE21, the PE22, the PE24, and the PE25 all receive the BUM4 traffic. After receiving the BUM4 traffic using an inter-network PW, based on rule R525, the PE21 replicates the traffic to the AC interface of the CE14 connected to the PE21. In addition, because a connection between the PE21 and the CE11 is flagged as a DF, the PE21 also replicates the traffic to the AC interface of the CE11. After receiving the BUM4 traffic using an inter-network PW, the PE22 replicates the traffic to the AC interface of the CE16 based on rule R525. Because a connection between the PE22 and the CE11 is flagged as a BDF, with reference to the general rule of EVPN, the PE22 does not replicate the BUM4 traffic to the CE11, to avoid a loop. After receiving the BUM4 traffic replicated by the PE23, the PE25 replicates the traffic only to the CE15 on the EVPN side based on the general rule of EVPN. On the VPLS side, based on the general rule of VPLS for common PWs, that is, in the full-mesh networking mode, the PE25 does not replicate the traffic to other PWs. After receiving the BUM4 traffic forwarded by the PE23, the PE24 device also on the VPLS side directly replicates the BUM4 traffic to the AC interface of the CE13. Based on the general rule of VPLS for common PWs, the PE24 does not send the BUM4 traffic to the PWs connected to the PE24, to avoid a loop.

Scenario 2: A PW is a common mode PW, and to-be-forwarded traffic is unicast traffic.

In the EVPN and VPLS active-active integration network, for the unicast traffic defined in the scenario 2, a forwarding path between the EVPN side and the VPLS side is determined based on MAC address learning rules. The MAC address learning rules are as follows:
R605: A multi-homed PE learns MAC from a DF PW.
R610: A multi-homed PE does not learn MAC from a BDF PW.
R615: After learning the MAC from the DF PW, the multi-homed PE synchronizes the MAC to an EVPN peer with an inter-network PW flag added.
R620: After the EVPN peer finds the MAC with the inter-network PW flag, if it is found that an ESI label value in a packet carrying the MAC exists locally, the EVPN peer points MAC of the EVPN peer to an address of a PE sending the packet, or otherwise, the MAC is discarded.

Based on the foregoing replication and forwarding rules, the network structure shown in FIG. 3 is still used as an example to analyze forwarding of unicast traffic in a corresponding structure.

Based on rules R605 and R610, the PE21, as a dual-homed PE device, learns MAC1 only from the PE23 via the ESI1 DF PW, but does not learn MAC2 from the PE24 via the ESI2 BDF PW. Similar to the operation of the PE21, the PE22 learns the MAC2 from the PE24 via the ESI2 DF PW, but does not learn the MAC1 of the PE23 from the ESI1 BDF PW. Based on rule R615, after learning the MAC1 of the PE23, the dual-homed PE21 separately sends a first packet carrying the MAC1 to the EVPN peers PE22 and PE25, so that the MAC1 is synchronized to the EVPN peers PE22 and PE25. The first packet carries an ESI1 label, and the PE21 flags the MAC1 as being obtained via an inter-network PW. Similar to the operation after the PE21 learns the MAC1, the PE22 sends a second packet to synchronize the MAC2 to the EVPN peers PE21 and PE25. The second packet carries an ESI2 label, and the PE22 flags the MAC2 as being obtained via an inter-network PW. Optionally, a specific flagging manner may be, for example, setting a flag bit in the packet carrying the MAC, or sending a notification message for announcement, or any other feasible manner, provided that a receiver can learn that the received MAC is obtained via an inter-network PW.

Based on rule R620, the EVPN peer PE22 learns the MAC1 and learns that the MAC1 is obtained via an inter-network PW. In this case, the PE22 compares an ESI label value in the first packet carrying the MAC1 with an ESI value locally stored in the PE22, and finds that there is a same ESI label value ESI1. The PE22 points MAC of the PE22 to the PE21, that is, a sender of the first packet. The PE21 learns the MAC2 and learns that the MAC2 is obtained via an inter-network PW. In this case, the PE21 compares an ESI label value in the second packet carrying the MAC2 with an ESI value locally stored in the PE21, and finds that there is a same ESI2 label. The PE21 points MAC of the PE21 to the PE22, that is, a sender of the second packet. Similarly, based on rule R620, after learning the MAC1 or MAC2 address, the PE25 learns that the MAC1 and the MAC2 are obtained via an inter-network PW, and then checks a locally stored ESI value. However, the locally stored ESI value does not match the ESI1 carried in the first packet or the ESI2 carried in the second packet. Therefore, the MAC1 and the MAC2 are discarded.

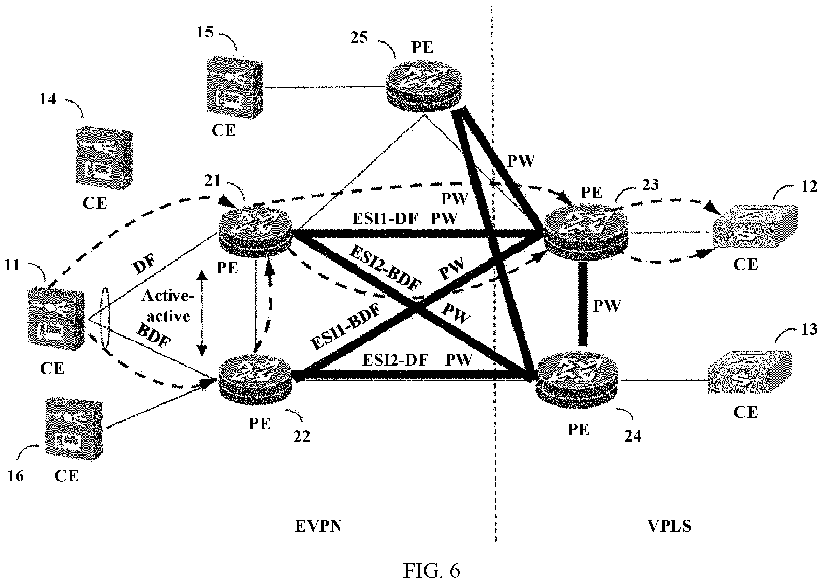

FIG. 6 shows a specific process of forwarding unicast traffic based on the foregoing MAC address learning. The CE11 is dual-homed to the PE21 and the PE22. When first unicast traffic sent by the CE11 to the CE12 is first forwarded to the PE21, the PE21 queries a first MAC forwarding table of the PE21 and directly forwards the traffic to the PE23 via the inter-network ESI1 DF PW. After receiving the first unicast traffic, the PE23 sends the first unicast traffic to the CE12. When second unicast traffic sent by the CE11 to the CE12 is first forwarded to the PE22, the PE22 queries a second MAC forwarding table of the PE22, and finds that MAC sent to the CE12 points to the PE21, and therefore sends the second unicast traffic to the PE21. Then, the PE21 queries the first MAC forwarding table, and then forwards the traffic to the PE23 via the inter-network ESI1 DF PW, and finally sends the traffic to the CE12. A process of forwarding unicast traffic sent by the CE11 to the CE13 is similar to the foregoing process, and details are not described herein again. On the contrary, when the CE12 sends third unicast traffic to the CE11, the PE23 queries a third MAC forwarding table of the PE23, and finds only a forwarding path pointing to the PE21. Therefore, the third unicast traffic can reach the CE11 only through a forwarding path of CE12-PE23-PE21.

In a possible design, the following rule is further included:
R625: After the EVPN peer finds the MAC with the inter-network PW flag, if it is found that an ESI label value in a packet carrying the MAC exists locally, a BDF PW corresponding to the ESI value is set as a secondary path.

FIG. 6 is still used as an example. Based on the foregoing rule R625, when receiving the first packet sent by the EVPN peer PE21, if the PE22 finds that the ESI label value carried in the first packet is ESI1, and the PE22 locally stores the ESI value, the PE22 sets the ESI1 BDF PW connected to the PE22 and the PE23 as a secondary path. In this case, the PE22 and the PE23 respectively add MAC addresses of each other to the second MAC forwarding table and the third forwarding table, and flag the MAC addresses as secondary MAC addresses for forwarding unicast traffic between the CE11 and the CE12. In this way, when the PE21 is unavailable due to a fault or other reasons, the unicast traffic between the CE11 and the CE12 may be normally forwarded using the secondary path between the PE22 and the PE23. Similarly, the PE21 may also set the ESI2 BDF PW connected to the PE21 and the PE24 as a secondary path for forwarding unicast traffic between the CE11 and the CE13 when the PE22 is unavailable. In this way, robustness and security of network communication are improved.

It should be noted that FIG. 6 shows a case in which the PE21 and the PE22 are dual-homed PEs of each other and both play only a dual-homed role. For a multi-homed role, in addition to the example dual-homing case, in another possible design, more than two PEs may be multi-homed PEs of each other. Further, one or more PEs in the network may play roles of both a single-homed PE and a multi-homed PE, and for the role of the multi-homed PE, the one or more PEs may even belong to a plurality of different multi-homed PE groups. The case shown in FIG. 6 does not constitute a unique limitation on the embodiments of the present invention. In addition, when one PE belongs to a plurality of different multi-homed PE groups, the PE locally stores a plurality of ESI values. In this case, any feasible search or matching algorithm may be used, to determine whether an ESI label value carried in a packet received by the PE is the same as any one of the plurality of locally stored ESI values. Regardless of the foregoing specific cases and some combinations and variations of some possible cases not explicitly described, rules R605 to R620 may be used to implement MAC address learning and normal forwarding of unicast traffic, provided that an EVPN and VPLS active-active integration network structure is used.

All the PWs in the foregoing scenario 1 and scenario 2 are in a common mode. However, in some actual networking scenarios, a PW may alternatively be in a form of a PW redundancy group (English: PW Redundancy Group, PWRG). The PW redundancy group is a PW protection mechanism that can be used in a VPLS scenario. A plurality of devices are deployed for a service for redundancy protection, to improve efficiency of device switching due to a fault and reduce service loss. To maintain original VPLS forwarding behavior in a PW redundancy group mode, it is necessary to ensure that only one of a group of PWs that form a redundancy backup is in an active state and all the other PWs are in a standby state. The PW redundancy group generally includes two modes: a master/slave (English: Master/Slave) mode and an independent (English: Independent) mode. In the master/slave mode, a local end determines an active/standby state of a PW and notifies a remote end using a signaling protocol, and a remote PE may detect the active/standby state. Active/standby relationships of a PW side and an AC side do not affect each other, and fault isolation can be implemented between the PW side and the AC side. In the independent mode, an active/standby state of a PW of a local end is determined from an AC side negotiation result of a remote end, and the remote end notifies the active/standby state to the local end. AC side protection switching occurring due to a fault causes PW side protection switching to be performed at the same time, and fault isolation cannot be implemented. A PW in the active state in the PW redundancy group is referred to as a primary PW (English: Primary PW), and is set to being preferentially used to forward traffic. Another PW in the backup state is referred to as a secondary PW (English: Secondary PW). When the primary PW works normally, the secondary PW is not used to forward traffic, but may be configured to receive traffic. The primary PW and the secondary PW may be determined using forwarding priority configuration parameters of PWs. A PW with the highest priority is used as the primary PW. In the master/slave mode, a local device may determine the primary and secondary PWs using the forwarding priority configuration parameters. In the independent mode, a forwarding status of a PW of a local end is determined based on a forwarding status learned by a remote end, rather than the forwarding priority configuration parameters.

In the EVPN and VPLS active-active integration network, a multi-homed PE on the EVPN side may be connected to a PE on the VPLS side in a form of a PW redundancy group. FIG. 3 is still used as an example. The PE21 and the PE22 are dual-homed PEs, and the PE23 is connected to two PWs of the PE21 and the PE22 respectively to form a PW redundancy group PWRG1. Similarly, the PE24 is connected to two PWs of the PE21 and the PE22 respectively to form a PW redundancy group PWRG2. As mentioned above, for PWs in a same group, in a normal working state, only a primary PW supports forwarding, and the secondary PW is not used to forward traffic. However, the secondary PW can be configured to receive traffic, that is, the PWs in the same group support a multi-receiving mode. If there is only one secondary PW, the primary and secondary PWs support a dual-receiving mode. Therefore, the following further describes, by still using the network structure shown in FIG. 3 as an example, four different scenarios based on whether the PWRG1 and/or the PWRG2 supports dual-receiving and whether a type of to-be-forwarded traffic is BUM traffic or unicast traffic.

Scenario 3: PWs of multi-homed PEs form a PW redundancy group and do not support dual-receiving, and to-be-forwarded traffic is BUM traffic.

For the BUM traffic defined in the scenario 3, replication and forwarding rules between the EVPN side and the VPLS side are specifically as follows:
R705: Traffic from an AC interface can be replicated to an inter-network DF PW.
R710: Traffic from an AC interface is not replicated to an inter-network BDF PW.
R715: Traffic from a common EVPN peer is not replicated to an inter-network PW.
R720: Traffic from a multi-homed PE is replicated to an inter-network DF PW.
R725: Traffic received by an inter-network PW is replicated to an AC interface and a multi-homed PE, and carries an ESI label when replicated to the multi-homed PE.
R730: After receiving the traffic carrying the ESI label, the multi-homed PE replicates the traffic only to an AC interface.

When BUM traffic is forwarded from the EVPN side to the VPLS side, application scenarios and manners of the foregoing replication rules R705 to R720 are the same as those of the foregoing rules R505 to R520. For examples of BUM traffic forwarding processes, refer to FIG. 5a to FIG. 5c. Details are not described herein again. It should be particularly noted that, different from rule R510 applicable to forwarding of inter-network common PWs, a mechanism of a PW redundancy group that does not support dual-receiving can ensure that a secondary PW does not replicate, after receiving BUM traffic sent by a PE, the BUM traffic to an AC interface. This can prevent the BUM traffic from flapping locally. Therefore, in a possible design, rule R710 may be deleted. In this case, even if a BDF PW receives BUM traffic, the BDF PW does not replicate the BUM traffic to an AC interface connected to the BDF PW. When R710 is retained, a bandwidth and overheads can be saved.

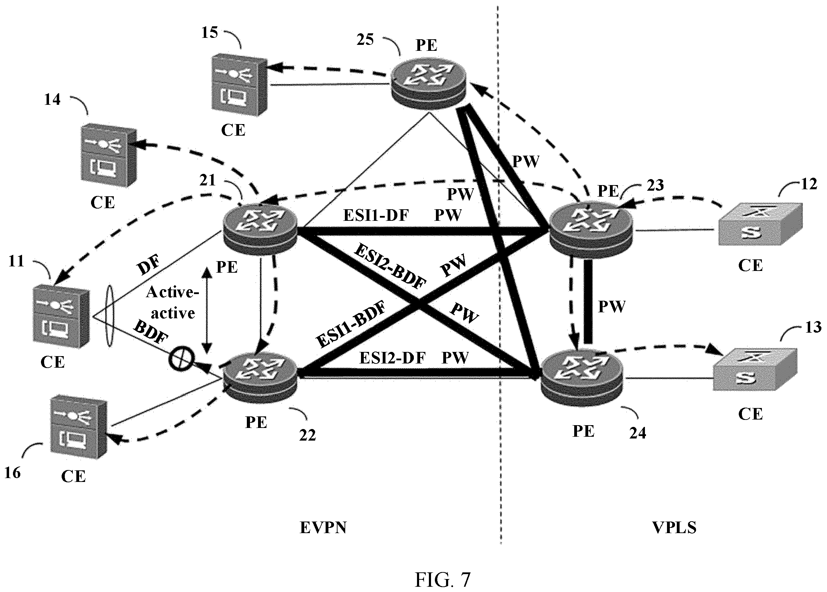

When BUM traffic is forwarded from the VPLS side to the EVPN side, rules R725 and R730 are applied. The network structure shown in FIG. 3 is still used as an example. After the PE23 receives BUM5 traffic sent from the CE12, because the PE23 is connected to the dual-homed PE21 and PE22 in a form of a PW redundancy group, in this case, based on the forwarding rule of the VPLS redundancy group, the BUM5 traffic is forwarded to the PE21 only via the ESI1 DF PW, different from an inter-network common PW connection case shown in FIG. 5d in which the BUM5 traffic is forwarded to both the PE21 and the PE22. Therefore, the PE22 needs to receive the BUM5 traffic using the PE21 that has a CE11 dual-homing relationship with the PE22. Based on rule R725, after receiving the BUM5 traffic via the inter-network PW ESI1 DF PW, the PE21 replicates the traffic to an AC interface of a CE device connected to the PE21. In addition, based on the general rule of EVPN, the PE21 is a DF device connected to the CE11. Therefore, the BUM5 traffic may be replicated from the PE21 to the CE11 and the CE14. In addition, based on rule R725, the PE21 may further replicate the BUM5 traffic to the PE22 that has a CE11 dual-homing relationship with the PE21, and needs to add the ESI1 label to the BUM5 traffic. Based on rule R730, after receiving the BUM5 traffic, the PE22 that has a CE11 dual-homing relationship with the PE21 finds that the traffic carries the ESI1 label, and therefore replicates the traffic only to an AC interface of a CE device connected to the PE22. However, based on the general rule of EVPN, the PE22, as a BDF, cannot replicate the BUM5 traffic to the CE11. Therefore, the BUM5 traffic can be replicated from the PE22 only to the CE16. For the foregoing replication and forwarding process of the BUM5 traffic sent from the CE12, refer to FIG. 7. When the PE24 is connected to the PE21 and the PE22 in a form of a PW redundancy group, a similar replication and forwarding process is performed for BUM traffic.

Scenario 4: PWs of multi-homed PEs form a PW redundancy group and do not support dual-receiving, and to-be-forwarded traffic is unicast traffic.

For the unicast traffic defined in the scenario 4, a forwarding path between the EVPN side and the VPLS side is determined based on MAC address learning rules. The MAC address learning rules are as follows:
R805: A multi-homed PE learns MAC from a DF PW.
R810: A multi-homed PE does not learn MAC from a BDF PW.
R815: After learning the MAC from the DF PW, the multi-homed PE synchronizes the MAC to an EVPN peer with an inter-network PW flag added.
R820: After the EVPN peer finds the MAC with the inter-network PW flag, if it is found that an ESI label value in a packet carrying the MAC exists locally, the EVPN peer points MAC of the EVPN peer to an address of a PE sending the packet, or otherwise, the MAC is discarded.

In this scenario, a MAC address learning process and replication rules of unicast traffic are the same as R605 to R620. For an example unicast traffic forwarding process, refer to FIG. 6. Details are not described herein again. Similarly, in a possible design, the scenario 4 may further include rule R825: After the EVPN peer finds the MAC with the inter-network PW flag, if it is found that an ESI label value in a packet carrying the MAC exists locally, a BDF PW corresponding to the ESI value is set as a secondary path.

Scenario 5: PWs of multi-homed PEs form a PW redundancy group and support dual-receiving, and to-be-forwarded traffic is BUM traffic.

For the BUM traffic defined in the scenario 5, replication and forwarding rules between the EVPN side and the VPLS side are specifically as follows:
R905: Traffic from an AC interface can be replicated to an inter-network DF PW.
R910: Traffic from an AC interface can be replicated to an inter-network BDF PW.
R915: Traffic from a common EVPN peer is not replicated to an inter-network PW.
R920: Traffic from a multi-homed PE is not replicated to an inter-network DF PW.
R925: Traffic received by an inter-network PW is replicated to an AC interface and a multi-homed PE, and carries an ESI label when replicated to the multi-homed PE.
R930: After receiving the traffic carrying the ESI label, the multi-homed PE replicates the traffic only to an AC interface.

The network structure in FIG. 3 is still used as an example. When the dual-homed PE21 and PE22 are connected to the PE23, the PWs of the dual-homed PE21 and PE22 are in a redundancy group mode and support dual-receiving. Based on rules R905 and R910, BUM traffic sent by the CE11, that is, traffic from an AC interface, is replicated to the PE21 and the PE22. Because the ESI1 DF PW configured to forward, to the PE23, the traffic replicated by the PE21 and the ESI1 BDF PW that forwards, to the PE23, traffic replicated by the PE22 form a PW redundancy group supporting dual-receiving, based on a dual-receiving mechanism of the PW redundancy group, it can be ensured that no flapping occurs on the PE23 device. Further, because the BUM traffic is replicated from the PE21 and the PE22 to the PE23 based on the dual-receiving mechanism, rule R920 is set, so that the PE21 or the PE22 does not forward the BUM traffic replicated from each other, to avoid a loop. Application manners of rules R915, R925, and R930 are the same as those of rules R715, R725, and R730 defined in the scenario 3, and details are not described herein again. If the PWs of the PE21 and the PE22 connected to the PE24 respectively also form a PW redundancy group and support dual-receiving, a process of forwarding BUM traffic sent to the PE24 is the same as that to the PE23.

Scenario 6: PWs of multi-homed PEs form a PW redundancy group and support dual-receiving, and to-be-forwarded traffic is unicast traffic.

For the unicast traffic defined in the scenario 6, a forwarding path between the EVPN side and the VPLS side is determined based on MAC address learning rules. The MAC address learning rules are as follows:
R1005: A multi-homed PE learns MAC from a DF PW.
R1010: A multi-homed PE learns MAC from a BDF PW.
R1015: After learning the MAC from the DF PW, the multi-homed PE synchronizes the MAC to an EVPN peer with an inter-network PW flag added.
R1020: After the EVPN peer finds the MAC with the inter-network PW flag, if it is found that an ESI label value in a packet carrying the MAC exists locally, the EVPN peer points MAC of the EVPN peer to an address of a PE sending the packet, or otherwise, the MAC is discarded.

FIG. 3 is still used as an example. When the PWs connected between the dual-homed PE21 and PE22 and the PE23 form a PW redundancy group and support dual-receiving, the PE23 is allowed to receive unicast traffic from the PE21 and the PE22. Therefore, referring to rule R1005, the PE21 learns a MAC address of the PE23 via the ESI DF PW. Referring to rule R1010, the PE22 may also learn the MAC address of the PE23 via the ESI BDF PW. For application of the remaining replication rules in this scenario 6, refer to corresponding descriptions in the foregoing scenario 2, and details are not described herein again. Similarly, in a possible design, the scenario 6 may further include rule R1025: After the EVPN peer finds the MAC with the inter-network PW flag, if it is found that an ESI label value in a packet carrying the MAC exists locally, a BDF PW corresponding to the ESI value is set as a secondary path, to improve reliability and robustness of network transmission.

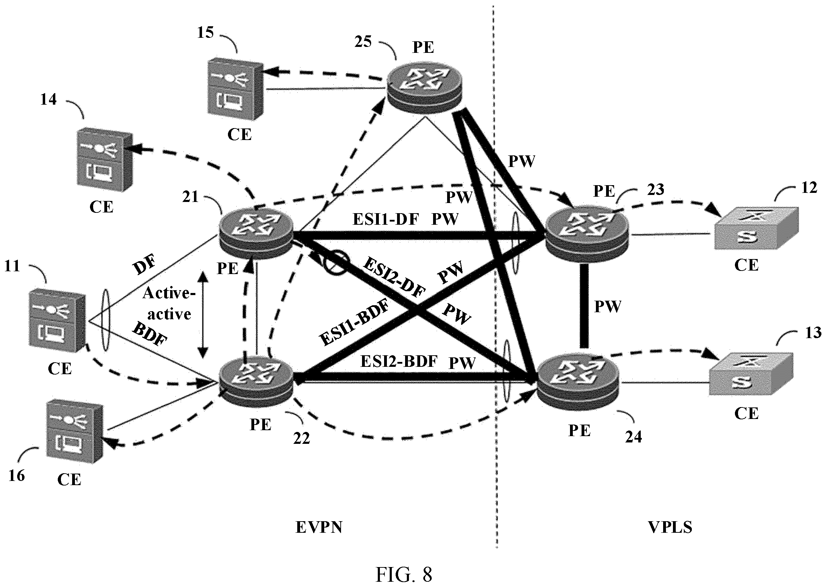

It should be noted that, actually, modes of PWs connecting multi-homed PEs on the EVPN side and PEs on the VPLS side may be the same or different. For example, FIG. 3 includes at least (1) two PWs of the dual-homed PE21 and PE22 respectively connected to the PE23, (2) two PWs of the dual-homed PE21 and PE22 respectively connected to the PE24. PW modes of the two groups (1) and (2) of PWs may be a same combination or different combinations of being a common PW, belonging to a PW redundancy group that does not support dual-receiving, and belonging to a PW redundancy group that supports dual-receiving. After a specific combination manner is determined, the group (1) and group (2) of PWs can apply corresponding replication rules respectively based on a PW mode type determined for the group (1) and group (2) of PWs and a traffic type. For more clear descriptions, replication rules in a possible confusing scenario are further elaborated herein. The scenario is shown in FIG. 8. The PWs connected between the dual-homed PE21 and PE22 and the PE23 form a PW redundancy group but do not support dual-receiving, and the PWs connected between the dual-homed PE21 and PE22 and the PE24 form a PW redundancy group and support dual-receiving. In both of the two redundancy groups, the PW connected to the PE21 device is set as a DF PW. In this case, if to-be-forwarded traffic is BUM6 traffic, after the BUM6 traffic sent from the PE22 is replicated to the PE21, because the ESI1 DF PW between the PE21 and the PE23 does not support the dual-receiving mode, referring to rule R720, the BUM6 traffic is replicated from the dual-homed PE21 to the ESI1 DF PW. Because the ESI2 DF PW between the PE21 and the PE24 supports the dual-receiving mode, referring to rule R920, the BUM6 traffic is not replicated from the dual-homed PE21 to the ESI2 DF PW.

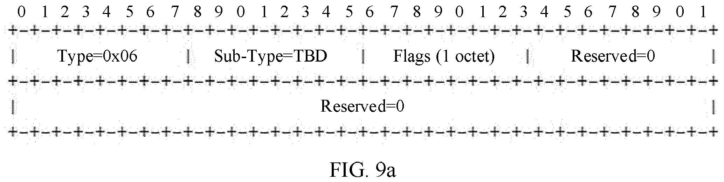

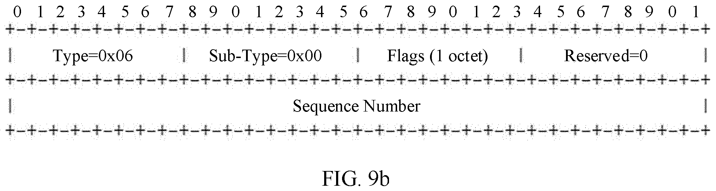

When unicast traffic is replicated and forwarded, different MAC learning policies and replication and forwarding rules need to be determined based on different PW types. Therefore, it is necessary to flag an inter-network PW type of a source PW for a corresponding MAC address during MAC learning. There are three types of being a common PW, belonging to a PW redundancy group that does not support dual-receiving, and belonging to a PW redundancy group that supports dual-receiving. In addition, a same ESI label needs to be set for PWs that form a same PW redundancy group. To this end, it may be considered to add a PW flag to a MAC address in any feasible manner. Optionally, for example, it is considered as follows: (1) adding a MAC extended community attribute, and flagging and distinguishing the three types of PWs using a Flags field, as shown in FIG. 9a; or (2) reusing an existing MAC mobility extended community attribute, and flagging and distinguishing the three types of PWs using a reserved bit of a Flags field, as shown in FIG. 9b.

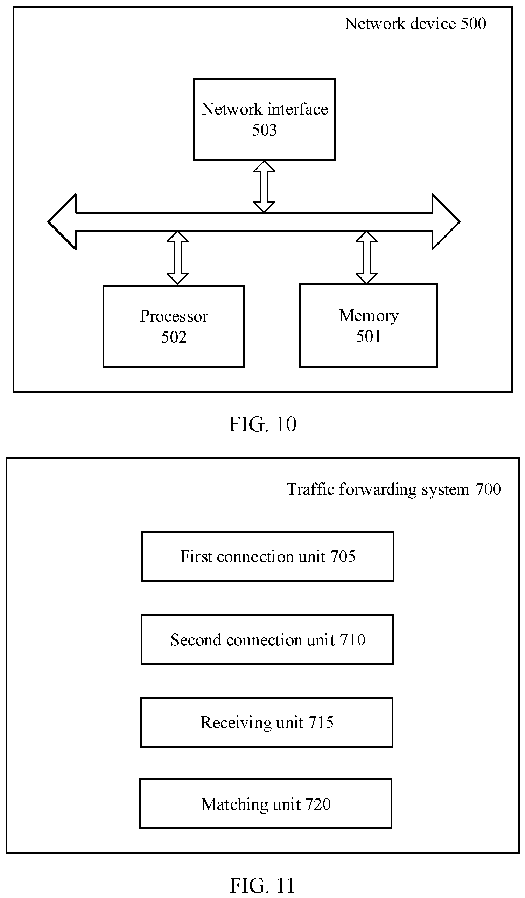

The foregoing describes, in detail with reference to FIG. 3 to FIG. 8, the traffic replication and forwarding method and the replication and forwarding rules according to the embodiments of this application. Next, a PE device for traffic forwarding according to the embodiments of this application is described with reference to FIG. 10.

FIG. 10 is a schematic diagram of a network device 500 according to an embodiment of this application. The network device 500 may be, for example, the PE device PE21 or PE22 on the EVPN side in FIG. 3, and may be configured to perform the method shown in FIG. 4. The network device 500 includes a memory 501, a processor 502, and a network interface 503. The network interface 503 is configured to receive traffic forwarded by another PE device, or send the traffic to another PE device based on forwarding rules. For example, the network interface 503 may be an Ethernet interface.

The memory 501 is configured to store computer-readable instructions.

The processor 502 is configured to invoke the computer-readable instructions to: run, by the network device together with a plurality of other network devices, an EVPN, where the network device serves as a PE device and form, together with at least one PE in the EVPN, a multi-homed structure for a CE device or a terminal device;
connect to at least one PE in a VPLS through an inter-network pseudo wire PW;
receive data traffic using the network interface 503; and
forward the data traffic based on a matching result between the data traffic and the following conditions using the network interface 503, where the conditions include: (1) being sent by another PE device via an inter-network PW of the network device; (2) needing to be forwarded by the network device to a PE device connected via an inter-network PW; and/or (3) including an inter-network PW flag.

For example, in FIG. 3, the network device PE21 receives unicast traffic sent by the PE22, and forwards the unicast traffic to the CE12 device. The network device PE21 runs the EVPN together with other network devices PE22 and PE25. The PE21 forms, together with the PE22, a dual-homed structure for the CE11, and is connected to the PE23 and the PE24 in the VPLS using inter-network PWs, respectively. The inter-network PWs may be in, for example, a common PW mode. In a possible case, the PE21 receives unicast traffic sent by the PE22. When learning a MAC route, the PE22 learns a MAC route of the PE24 via the inter-network PW ESI2 DF PW in the common PW mode, and after learning the MAC route of the PE24, the PE22 adds an inter-network PW flag to the MAC route. Therefore, when receiving the unicast traffic sent by the PE22, the PE21 finds that the unicast traffic includes the inter-network PW flag, that is, the foregoing condition (3) is met. In this case, the PE21 forwards the unicast traffic to the PE23 based on MAC learning and forwarding rules determined for inter-network PWs.

In another possible design, there may be a plurality of network interfaces configured to receive and forward data traffic. When there are a plurality of network interfaces, data traffic may be received and forwarded using a same or different network interfaces.

An embodiment of this application further provides a traffic forwarding system 600, which may be, for example, the network system structure shown in FIG. 3. The system 600 includes a plurality of first PE devices. The plurality of first PE devices are EVPN devices, and the plurality of first PE devices form a multi-home structure for a CE device or a terminal device. For example, in FIG. 3, the EVPN devices PE21 and PE22 form a dual-homed structure for the CE11 device.

Each first PE device in the multi-homed structure is connected to at least one identical second PE device using an inter-network PW, and the second PE device is a VPLS device. For example, in FIG. 3, the PE21 and the PE22 in the dual-homed structure are connected to the VPLS devices PE23 and PE24 using inter-network PWs, respectively.

The first PE device receives data traffic; and
the first PE device forwards the data traffic based on a matching result between the data traffic and the following conditions, where the conditions include:

(1) being sent by another PE device via an inter-network PW of the network device; (2) needing to be forwarded by the network device to a PE device connected via an inter-network PW; and/or (3) including an inter-network PW flag.

For example, in FIG. 3, the CE device CE12 on the VPLS side sends BUM traffic to the CE device CE11 on the EVPN side. After the CE12 sends the BUM traffic, the VPLS device PE23 receives the BUM traffic. The VPLS device PE23 forwards, based on a general forwarding rule of VPLS, the BUM traffic to the PE21 via a PW connected to the PE23. The PW is specifically in an inter-network PW mode, that is, in this case, the PE21, as the first PE device, finds that the PE23 sends the BUM traffic via an inter-network PW of the PE21, and the foregoing condition (3) is met. Therefore, the PE21 continues to forward the BUM traffic based on rules determined for inter-network PWs.

An embodiment of this application further provides another traffic forwarding system 700, as shown in FIG. 11. The system 700 includes:
a first connection unit 705, configured to run, by a first network device together with a plurality of other network devices in a network, an Ethernet virtual private network EVPN, where the first network device serves as a provider edge PE device and forms, together with at least one PE in the EVPN, a multi-homed structure for a customer edge CE device or a terminal device;
a second connection unit 710, configured to connect to, by the first network device, at least one PE in a virtual private local area network service VPLS through an inter-network pseudo wire PW;
a receiving unit 715, configured to receive, by the first network device, data traffic; and
a matching unit 720, configured to forward, by the first network device, the data traffic based on a matching result between the data traffic and the following conditions, where the conditions include:

   (1) being sent by another PE device via an inter-network PW of the first network device; (2) needing to be forwarded by the first network device to a PE device connected via an inter-network PW; and/or (3) including an inter-network PW flag.

For the network device 500, the traffic forwarding system 600, or the traffic forwarding system 700, for a specific replication rule specifically applicable to an inter-network PW and a traffic forwarding process when the foregoing condition is met, refer to the scenarios 1 to 6 in the foregoing method embodiments. Details are not described herein again.

An embodiment of this application further provides a computer-readable storage medium or a computer program product, configured to store a computer program. The computer program is configured to perform the traffic forwarding method 400.

It should be understood that, in this embodiment of this application, a function implemented by the processor 501 may be implemented by an integrated logic circuit of hardware or an instruction in a form of software, for example, a central processing unit CPU, or another general purpose processor, a digital signal processor DSP, an application-specific integrated circuit ASIC, a field programmable gate array FPGA or another programmable logic device, a discrete gate or transistor logic device, a discrete hardware component, or the like. The general purpose processor may be a microprocessor, or the processor may be any conventional processor or the like.

It should be understood that in the embodiments of this application, the traffic sending and receiving function implemented by the network interface 501 may be implemented by an independent unit, or the network interface 501 may further include, for example, a receiving subunit and a sending subunit, respectively configured to implement traffic receiving, forwarding, and the like. This is not specifically limited herein.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, modules and method steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

All or some of the foregoing embodiments may be implemented using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive Solid State Disk (SSD)), or the like. The embodiments in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

In summary, it should be noted that what is described above is merely example embodiments of the technical solutions of this application, but is not intended to limit the protection scope of this application.

## Claims

1. A traffic forwarding method, comprising:
running, by a first network device together with a plurality of other network devices in a network, an Ethernet virtual private network EVPN, wherein the first network device serves as a provider edge PE device and forms, together with at least one PE in the EVPN, a multi-homed structure for a customer edge CE device or a terminal device;
connecting to at least one PE in a virtual private local area network service VPLS through an inter-network pseudo wire PW;
receiving data traffic; and
forwarding the data traffic based on a matching result between the data traffic and the following conditions, wherein the conditions comprise:
(1) being sent by another PE device via an inter-network PW of the first network device; (2) needing to be forwarded by the first network device to a PE device connected via an inter-network PW; and/or (3) comprising an inter-network PW flag.

2. The method according to claim 1, wherein a mode of an inter-network PW connected to the first network device is a mode of being a common PW, belonging to a PW redundancy group that does not support dual-receiving, or belonging to a PW redundancy group that supports dual-receiving.

3. The method according to claim 2, wherein for a plurality of inter-network PWs connected to a group of PEs in the multi-homed structure, one of the inter-network PWs serves as a designated forwarder DF PW, and a remaining inter-network PW serves as a backup designated forwarder BDF PW.

4. The method according to claim 3, wherein when the mode of the inter-network PW is being a common PW and to-be-forwarded traffic is BUM traffic, the first network device forwards the BUM traffic based on the following rules:
traffic from an AC interface can be replicated to an inter-network DF PW;
traffic from an AC interface is not replicated to an inter-network BDF PW;
traffic from a common EVPN peer EVPN peer is not replicated to an inter-network PW;
traffic from a multi-homed PE is replicated to an inter-network DF PW; and
traffic received by an inter-network PW is replicated only to an AC interface, wherein
the common EVPN peer forms an EVPN peer together with at least one of the plurality of PE devices, but the common EVPN peer is not a multi-homed PE.

5. The method according to claim 3, wherein when the mode of the inter-network PW is being a common PW and to-be-forwarded traffic is unicast traffic, the first network device determines a forwarding path based on MAC address learning, and the MAC address learning rules are as follows:
a multi-homed PE learns MAC from a DF PW;
a multi-homed PE does not learn MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

6. The method according to claim 3, wherein when the mode of the inter-network PW is belonging to a PW redundancy group that does not support dual-receiving and to-be-forwarded traffic is BUM traffic, the first network device forwards the BUM traffic based on the following rules:
traffic from an AC interface can be replicated to an inter-network DF PW;
traffic from a common EVPN peer is not replicated to an inter-network PW;
traffic from a multi-homed PE is replicated to an inter-network DF PW;
traffic received by an inter-network PW is replicated to an AC interface and a multi-homed PE, and carries an ESI label when replicated to the multi-homed PE; and
after receiving the traffic carrying the ESI label, the multi-homed PE replicates the traffic only to an AC interface, wherein
the common EVPN peer forms an EVPN peer together with at least one of the plurality of PE devices, but the common EVPN peer is not a multi-homed PE.

7. The method according to claim 3, wherein when the mode of the inter-network PW is belonging to a PW redundancy group that does not support dual-receiving and to-be-forwarded traffic is unicast traffic, the first network device determines a forwarding path based on MAC address learning, and the MAC address learning rules are as follows:
a multi-homed PE learns MAC from a DF PW;
a multi-homed PE does not learn MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

8. The method according to claim 3, wherein when the mode of the inter-network PW is belonging to a PW redundancy group that supports dual-receiving and to-be-forwarded traffic is BUM traffic, the first network device forwards the BUM traffic based on the following rules:
traffic from an AC interface can be replicated to an inter-network DF PW;
traffic from an AC interface can be replicated to an inter-network BDF PW;
traffic from a common EVPN peer is not replicated to an inter-network PW;
traffic from a multi-homed PE is not replicated to an inter-network DF PW;
traffic received by an inter-network PW is replicated to an AC interface and a multi-homed PE, and carries an ESI label when replicated to the multi-homed PE; and
after receiving the traffic carrying the ESI label, the multi-homed PE replicates the traffic only to an AC interface, wherein
the common EVPN peer forms an EVPN peer together with at least one of the plurality of PE devices, but the common EVPN peer is not a multi-homed PE.

9. The method according to claim 3, wherein when the mode of the inter-network PW is belonging to a PW redundancy group that supports dual-receiving and to-be-forwarded traffic is unicast traffic, the first network device determines a forwarding path based on MAC address learning, and the MAC address learning rules are as follows:
a multi-homed PE learns MAC from a DF PW;
a multi-homed PE learns MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

10. A network device, comprising:
a memory, configured to store computer-readable instructions; and
a processor, configured to invoke the computer-readable instructions to:
run, by the network device together with a plurality of other network devices, an Ethernet virtual private network EVPN, wherein the network device serves as a provider edge PE device and forms, together with at least one PE in the EVPN, a multi-homed structure for a customer edge CE device or a terminal device;
connect to at least one PE in a virtual private local area network service VPLS through an inter-network pseudo wire PW;
receive data traffic; and
forward the data traffic based on a matching result between the data traffic and the following conditions, wherein the conditions comprise:
(1) being sent by another PE device via an inter-network PW of the network device; (2) needing to be forwarded by the network device to a PE device connected via an inter-network PW; and/or (3) comprising an inter-network PW flag.

11. The method according to claim 10, wherein a mode of an inter-network PW connected to the network device is a mode of being a common PW, belonging to a PW redundancy group that does not support dual-receiving, or belonging to a PW redundancy group that supports dual-receiving.

12. The method according to claim 11, wherein for a plurality of inter-network PWs connected to a group of PEs in the multi-homed structure, one of the inter-network PWs serves as a designated forwarder DF PW, and a remaining inter-network PW serves as a backup designated forwarder BDF PW.

13. The method according to claim 12, wherein when the mode of the inter-network PW is being a common PW and to-be-forwarded traffic is BUM traffic, the network device forwards the BUM traffic based on the following rules:
traffic from an AC interface can be replicated to an inter-network DF PW;
traffic from an AC interface is not replicated to an inter-network BDF PW;
traffic from a common EVPN peer EVPN peer is not replicated to an inter-network PW;
traffic from a multi-homed PE is replicated to an inter-network DF PW; and
traffic received by an inter-network PW is replicated only to an AC interface, wherein
the common EVPN peer forms an EVPN peer together with at least one of the plurality of PE devices, but the common EVPN peer is not a multi-homed PE.

14. The method according to claim 12, wherein when the mode of the inter-network PW is being a common PW and to-be-forwarded traffic is unicast traffic, the network device determines a forwarding path based on MAC address learning, and the MAC address learning rules are as follows:
a multi-homed PE learns MAC from a DF PW;
a multi-homed PE does not learn MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

15. The method according to claim 12, wherein when the mode of the inter-network PW is belonging to a PW redundancy group that does not support dual-receiving and to-be-forwarded traffic is BUM traffic, the network device forwards the BUM traffic based on the following rules:
traffic from an AC interface can be replicated to an inter-network DF PW;
traffic from a common EVPN peer is not replicated to an inter-network PW;
traffic from a multi-homed PE is replicated to an inter-network DF PW;
traffic received by an inter-network PW is replicated to an AC interface and a multi-homed PE, and carries an ESI label when replicated to the multi-homed PE; and
after receiving the traffic carrying the ESI label, the multi-homed PE replicates the traffic only to an AC interface, wherein
the common EVPN peer forms an EVPN peer together with at least one of the plurality of PE devices, but the common EVPN peer is not a multi-homed PE.

16. The method according to claim 12, wherein when the mode of the inter-network PW is belonging to a PW redundancy group that does not support dual-receiving and to-be-forwarded traffic is unicast traffic, the network device determines a forwarding path based on MAC address learning, and the MAC address learning rules are as follows:
a multi-homed PE learns MAC from a DF PW;
a multi-homed PE does not learn MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

17. The method according to claim 12, wherein when the mode of the inter-network PW is belonging to a PW redundancy group that supports dual-receiving and to-be-forwarded traffic is BUM traffic, the network device forwards the BUM traffic based on the following rules:
traffic from an AC interface can be replicated to an inter-network DF PW;
traffic from an AC interface can be replicated to an inter-network BDF PW;
traffic from a common EVPN peer is not replicated to an inter-network PW;
traffic from a multi-homed PE is not replicated to an inter-network DF PW;
traffic received by an inter-network PW is replicated to an AC interface and a multi-homed PE, and carries an ESI label when replicated to the multi-homed PE; and
after receiving the traffic carrying the ESI label, the multi-homed PE replicates the traffic only to an AC interface, wherein
the common EVPN peer forms an EVPN peer together with at least one of the plurality of PE devices, but the common EVPN peer is not a multi-homed PE.

18. The method according to claim 12, wherein when the mode of the inter-network PW is belonging to a PW redundancy group that supports dual-receiving and to-be-forwarded traffic is unicast traffic, the network device determines a forwarding path based on MAC address learning, and the MAC address learning rules are as follows:
a multi-homed PE learns MAC from a DF PW;
a multi-homed PE learns MAC from a BDF PW;
after learning the MAC from the DF PW, the multi-homed PE synchronizes the MAC to an EVPN peer with an inter-network PW flag added; and
after the EVPN peer finds the MAC with the inter-network PW flag, if it is found that an ESI label value in a packet carrying the MAC exists locally, the EVPN peer points MAC of the EVPN peer to an address of a PE device sending the packet, or otherwise, the MAC is discarded.

19. A traffic forwarding system, comprising:
a first connection unit, configured to run, by a first network device together with a plurality of other network devices in a network, an Ethernet virtual private network EVPN, wherein the first network device serves as a provider edge PE device and forms, together with at least one PE in the EVPN, a multi-homed structure for a customer edge CE device or a terminal device;
a second connection unit, configured to connect to, by the first network device, at least one PE in a virtual private local area network service VPLS through an inter-network pseudo wire PW;
a receiving unit, configured to receive, by the first network device, data traffic; and
a matching unit, configured to forward, by the first network device, the data traffic based on a matching result between the data traffic and the following conditions, wherein the conditions comprise:
(1) being sent by another PE device via an inter-network PW of the first network device; (2) needing to be forwarded by the first network device to a PE device connected via an inter-network PW; and/or (3) comprising an inter-network PW flag.

20. A traffic forwarding system, comprising:
a plurality of first provider edge PE devices, wherein the plurality of first PE devices are Ethernet virtual private network EVPN devices, and the plurality of first PE devices form a multi-homed structure for a customer edge CE device or a terminal device;
each first PE device in the multi-homed structure is connected to at least one identical second PE device through an inter-network pseudo wire PW, and the second PE device is a virtual private local area network service VPLS device;
the first PE device receives data traffic; and
the first PE device forwards the data traffic based on a matching result between the data traffic and the following conditions, wherein the conditions comprise:
(1) being sent by another PE device via an inter-network PW of the network device; (2) needing to be forwarded by the network device to a PE device connected via an inter-network PW; and/or (3) comprising an inter-network PW flag.
